# EUROPÄISCHE PATENTSCHRIFT

(11) **EP 4 058 996 B1**
(45) Veröffentlichungstag und Bekanntmachung des Hinweises auf die Patenterteilung: **02.04.2025**
(21) Anmeldenummer: 20807284.3
(22) Anmeldetag: 11.11.2020
(51) Int. Cl.: G07D 11/18, G07D 11/40, B65G 47/48, B65G 47/52, B65G 47/53

(54) **ANORDNUNG UND VERFAHREN ZUR BEARBEITUNG VON WERTDOKUMENTEN**
ASSEMBLY AND METHOD FOR PROCESSING VALUE DOCUMENTS
ENSEMBLE ET PROCÉDÉ DE TRAITEMENT DE DOCUMENTS DE VALEUR

(30) Priorität: 13.11.2019 DE 102019007872
(43) Veröffentlichungstag der Anmeldung: 21.09.2022
(73) Patentinhaber: Giesecke+Devrient Currency Technology GmbH, 81677 München (DE)
(72) Erfinder: JAKOBS, Andreas, 81673 München (DE); KÖNIGER, Wolfgang, 85757 Karlsfeld (DE); KNICKREHM, Michael, 86157 Augsburg (DE); LINCK, Ralf, 81739 München (DE); REINISCH, Helmut-Karl, 81369 München (DE); VOELLMER, Christian, 82049 Pullach (DE); NADOLNY, Carsten, 80939 München (DE)
(74) Vertreter: Giesecke+Devrient IP
(86) Internationale Anmeldenummer: PCT/EP2020/025504
(87) Internationale Veröffentlichungsnummer: WO 2021/093990

(56) Entgegenhaltungen:
- EP-A1- 1 268 333
- EP-A1- 2 757 045
- DE-A1- 10 329 321
- DE-A1- 102012 011 231
- DE-A1- 19 603 363
- FR-A1- 2 630 412
- US-A- 3 608 698
- US-A- 5 794 534
- US-A1- 2007 264 114
- ONCAN ET AL: "Exact solution procedures for the balanced unidirectional cyclic layout problem", EUROPEAN JOURNAL OF OPERATIONAL RESEARCH, ELSEVIER, AMSTERDAM, NL, vol. 189, no. 3, 21 March 2008 (2008-03-21), pages 609 - 623, XP022552176, ISSN: 0377-2217

## Beschreibung

Die Erfindung betrifft eine Anordnung und ein Verfahren zur Bearbeitung von Wertdokumenten, z.B. Banknoten, Schecks, Gutscheinen, Tickets, o.ä..

In verschiedenen Ländern werden kommerzielle Unternehmen damit beauftragt, bestimmte Aufgaben der Logistik des Banknotenumlaufs in sogenannten Cash Centern zu übernehmen und durchzuführen. Aufgaben, die von solchen Cash Centern übernommen werden, bestehen beispielsweise darin, dass sie von Kunden angelieferte Bargeldbestände abrechnen und von den Kunden gewünschte Bargeldmengen in der gewünschten Menge konfektionieren und ausliefern. Diese einem speziellen Vorgang (Kunde, Geldautomat, Datum, etc.)zugeordneten Bargeldbestände, die neben Banknoten oft auch Münzen umfassen können, werden üblicherweise auch als "Deposits" bezeichnet. Die einem Deposit zugeordnete Bargeldmenge wird meist in einem Transportbehälter, wie einer Banknotenkassette oder einem Sicherheitsbeutel (Safebag) aufbewahrt und transportiert. Die zu bearbeitenden Deposits eines oder mehrerer Kunden können durch Werttransportunternehmen abgeholt und dem Cash Center angeliefert werden.

Die Bearbeitung der Banknoten im Cash Center umfasst üblicherweise zunächst eine manuelle Erfassung des jeweiligen Deposits. Anschließend wird der Banknotenstapel des jeweiligen Deposits zu einer Prüfvorrichtung transportiert, die eine Echtheitsprüfung sowie eine Zustandsprüfung jeder einzelnen Banknote und eine Sortierung der Banknoten nach Echtheit und Zustand durchführt. Die Banknoten werden dabei durch die Prüfvorrichtung gezählt und das Zählergebnis zur Abrechnung des Deposits verwendet, wobei eine Gutschrift für den Depositinhaber erstellt wird. Danach werden die so fertig bearbeiteten Banknoten in einen Tresor des Cash Centers gebracht. Zu einem späteren Zeitpunkt werden die Banknoten zum Zweck der Konfektionierung aus dem Tresor entnommen, d.h. für die gewünschte Auslieferung mengenmäßig und sortenmäßig zusammengestellt. Beispielsweise werden sie dann an einer Verpackungsvorrichtung für die Auslieferung aus dem Cash Center in Folie verpackt. Die in einem Cash Center durchzuführenden Transportaufgaben der Banknoten zwischen Vorbereitung, Prüfung, ggf. Konfektionierung und Verpackung der Banknoten erfordern bisher einen hohen Zeit- und Personaleinsatz.

Die EP 1 268 333 B1 offenbart ein Verfahren und eine Anordnung zur Bearbeitung von Wertdokumenten mit einer zyklisch umlaufenden Transportschleife.

Davon ausgehend ist es die Aufgabe der vorliegenden Erfindung, eine Anordnung und ein Verfahren zur Bearbeitung von Wertdokumenten zur Verfügung zu stellen, welche die Transportaufgaben der Wertdokumente, z.B. in einem Cash Center, verbessern können.

Diese Aufgabe wird gelöst durch die Merkmale der unabhängigen Ansprüche. Die abhängigen Ansprüche beschreiben bevorzugte Ausgestaltungen.

Die Anordnung zur Bearbeitung von Wertdokumente weist eine Transportvorrichtung für Wertdokumentaufnahmen auf, die dazu ausgebildet ist, mehrere Wertdokumentaufnahmen, durch die jeweils mindestens ein Wertdokumentstapel aufnehmbar ist, entlang einer Umlaufrichtung zu transportieren. Die erfindungsgemäße Transportvorrichtung bildet eine zyklisch umlaufende Transportschleife für die Wertdokumentaufnahmen. Außerdem weist die Anordnung zwei oder mehrere mit der Transportvorrichtung verbundene Prüfvorrichtungen zur Prüfung von Wertdokumenten auf. Für jede der Prüfvorrichtungen weist die Anordnung mindestens eine Transportschnittstelle auf. Durch ihre Transportschnittstelle ist die jeweilige Prüfvorrichtung mit der Transportvorrichtung derart verbunden, dass ein in der zyklisch umlaufenden Transportschleife befindlicher Wertdokumentstapel, ggf. zusammen mit einer den jeweiligen mindestens einen Wertdokumentstapel aufnehmenden Wertdokumentaufnahme, über die jeweilige Transportschnittstelle von der zyklisch umlaufenden Transportschleife zu der jeweiligen Prüfvorrichtung und/oder von der jeweiligen Prüfvorrichtung zu der zyklisch umlaufenden Transportschleife transportierbar ist. Die Transportschnittstelle der jeweiligen Prüfvorrichtung ist vorzugsweise zwischen der jeweiligen Prüfvorrichtung und der zyklisch umlaufenden Transportschleife angeordnet. Die Wertdokumentaufnahme oder der Wertdokumentstapel können z.B. durch Hinüberschieben mittels eines Schiebeelements von der Prüfvorrichtung an die zyklisch umlaufende Transportschleife, bzw. umgekehrt von der zyklisch umlaufende Transportschleife an die Prüfvorrichtung, übergeben werden.

Die Umlaufrichtung der zyklisch umlaufenden Transportschleife ist diejenige Richtung entlang der zyklisch umlaufenden Transportschleife, entlang der die Wertdokumentaufnahmen in der zyklisch umlaufenden Transportschleife transportiert werden (z.B. im Uhrzeigersinn oder im Gegenuhrzeigersinn). Die Transportvorrichtung kann dazu ausgebildet sein, wahlweise entlang beider Umlaufrichtungen betrieben zu werden, so dass die Wertdokumentaufnahmen wahlweise entlang einer ersten oder entlang einer zur ersten umgekehrten zweiten Umlaufrichtungen transportierbar sind. Zum Beispiel bildet die erste Transportrichtung eine Standardrichtung und ggf. wird temporär auf die umgekehrte zweite Umlaufrichtung umgeschaltet.

Die zyklisch umlaufende Transportschleife ist derart in sich geschlossen, dass die in der zyklisch umlaufenden Transportschleife befindlichen Wertdokumentaufnahmen (in denen sich ggf. jeweils einer oder mehrere Wertdokumentstapel befinden) - ohne eine Umkehrung ihrer Transportrichtung - die zyklisch umlaufenden Transportschleife mehrmals in derselben Umlaufrichtung durchlaufen können. Solange die Wertdokumentaufnahmen auf der Transportvorrichtung verbleiben, durchlaufen diese die zyklisch umlaufende Transportschleife (ohne eine Umkehrung ihrer Transportrichtung) automatisch mehrmals in derselben Umlaufrichtung. Solange der jeweilige Wertdokumentstapel nicht an einer der Transportschnittstellen (ggf. zusammen mit seiner Wertdokumentaufnahme) entnommen wird, durchläuft dieser mit seiner Wertdokumentaufnahme die zyklisch umlaufende Transportschleife mehrmals nacheinander und kommt so mehrmals an der jeweiligen Transportschnittstelle der mindestens einen Prüfvorrichtung vorbei. Die zyklisch umlaufende Transportschleife bildet eine endlose Transportschleife für die Wertdokumentaufnahmen, in denen sich ggf. jeweils einer oder mehrere Wertdokumentstapel befinden. Die zyklisch umlaufende Transportschleife erlaubt es, die Wertdokumentstapel je nach Bedarf, zu einem variablem Zeitpunkt, zwischen der zyklisch umlaufenden Transportschleife und der jeweiligen Prüfvorrichtung bzw. umgekehrt auszutauschen. Die zyklisch umlaufende Transportschleife ermöglicht so eine zeitlich flexible Zuführung des jeweiligen Wertdokumentstapels zur der jeweiligen Prüfvorrichtung.

Insbesondere kann die zyklisch umlaufende Transportschleife ein Transportring für Wertdokumentaufnahmen sein, in denen sich ggf. Wertdokumentstapel befinden, insbesondere ein in sich geschlossener Transportring. Dabei ist die Form der zyklisch umlaufenden Transportschleife bzw. des Transportrings keineswegs beschränkt. Zum Beispiel hat die Transportschleife bzw. der Transportring mehrere gerade Abschnitte und mehrere Kurven (z.B. 90°-Kurven und/oder 180°-Kurven), sowie ggf. auch kreisförmige, ellipsenähnliche, rechteckähnliche oder anders geformte Transportabschnitte.

Die zyklisch umlaufende Transportschleife erlaubt es, die Bearbeitungsreihenfolge der Wertdokumentstapel durch die mit der zyklisch umlaufenden Transportschleife verbundene mindestens eine Prüfvorrichtungen (bzw. durch eine oder mehrere mit der zyklisch umlaufenden Transportschleife verbundene Weiterbearbeitungsvorrichtungen) zu verändern, z.B. falls bestimmte Wertdokumentstapel mit höherer Priorität bearbeitet werden sollen als andere Wertdokumentstapel. Wertdokumentstapel niedrigerer Priorität können so temporär in der zyklisch umlaufenden Transportschleife verbleiben und erst bei einem der nächsten Umläufe um die zyklisch umlaufenden Transportschleife einer der Prüfvorrichtungen bzw. Weiterbearbeitungsvorrichtungen zugeführt werden. Während die Wertdokumentstapel niedriger Priorität in der zyklisch umlaufenden Transportschleife umlaufen, werden die mit höherer Priorität zu bearbeitenden Wertdokumentstapel aus der zyklisch umlaufenden Transportschleife den Prüfvorrichtungen bzw. Weiterbearbeitungsvorrichtungen zugeführt, auch wenn sie der zyklisch umlaufende Transportschleife später als die Wertdokumentstapel niedriger Priorität zugeführt worden sind. Die zyklisch umlaufenden Transportschleife ermöglicht es so, bei der Prüfung bzw. Weiterbearbeitung der Wertdokumentstapel von der Eingangsreihenfolge der Wertdokumentstapel abzuweichen, in der diese der zyklisch umlaufenden Transportschleife zugeführt werden.

Die zyklisch umlaufende Transportschleife bildet einen Pufferspeicher für Wertdokumentstapel, der mit mindestens einer Prüfvorrichtung verbunden ist. Falls zwei oder mehrere Prüfvorrichtung bzw. zwei oder mehrere Weiterverarbeitungsvorrichtungen mit der zyklisch umlaufende Transportschleife verbunden sind, bildet die zyklisch umlaufende Transportschleife einen gemeinsamen Pufferspeicher für Wertdokumentstapel, der zur gemeinsamen Zuführung bzw. Abführung von Wertdokumentstapeln zu bzw. von den Prüfvorrichtungen/ Weiterverarbeitungsvorrichtungen verwendbar ist. Auf einen Pufferspeicher für jede einzelne Prüfvorrichtung bzw. für jede einzelne Weiterverarbeitungsvorrichtung kann dann verzichtet werden. Der gemeinsame Pufferspeicher erlaubt es z.B., dass jeder Wertdokumentstapel zu seiner Prüfung/Weiterbearbeitung jeder beliebigen der Prüfvorrichtungen/Weiterbearbeitungsvorrichtungen zugeführt werden kann, also wahlweise der einen oder einer anderen Prüfvorrichtung bzw. der einen oder einer anderen Weiterbearbeitungsvorrichtung.

Insbesondere weist die Transportvorrichtung mehrere aneinandergereihte Transporteinrichtungen auf, die einen Ringschluss bilden. Dabei ist der Anfang der jeweils nachfolgenden der aneinandergereihten Transporteinrichtung am Ende der jeweils vorhergehenden der aneinandergereihten Transporteinrichtungen angeordnet. Die Übergabe der Wertdokumentaufnahmen zwischen den aneinandergereihten Transporteinrichtungen erfolgt vorzugsweise automatisch, z.B. durch hinüberschieben der Wertdokumentaufnahme mit Hilfe der vorhergehenden Transporteinrichtung auf die nachfolgende Transporteinrichtung, die die Wertdokumentaufnahme dann weitertransportiert.

Erfindungsgemäß weist die Anordnung mindestens zwei mit der Transportvorrichtung verbundene Prüfvorrichtungen auf, die zur Prüfung von Wertdokumenten, insbesondere zum Sortieren der in den Wertdokumentstapel zu der jeweiligen Prüfvorrichtung transportierten bzw. zugeführten Wertdokumente eingerichtet sind. Zur Aufnahme der sortierten Wertdokumente weisen diese Prüfeinrichtungen z.B. jeweils mindestens zwei Ausgabefächer für geprüfte und sortierte Wertdokumente auf. Insbesondere sind die mindestens zwei Prüfvorrichtungen jeweils zur Prüfung der Denomination und/oder zur Prüfung der Echtheit und/oder zur Prüfung des Zustands der jeweiligen Wertdokumente eingerichtet. Bevorzugt sind die mindestens zwei Prüfvorrichtungen in gleicher Weise zur Prüfung bzw. Sortierung der Wertdokumente eingerichtet, z.B. zur Prüfung bzw. Sortierung der Wertdokumente nach denselben Prüfklassen bzw. Sortierklassen. Für die Sortierung der Wertdokumente kommt es dabei nicht darauf an, durch welche der Prüfvorrichtungen sie geprüft und sortiert wurden.

Außerdem weist die Anordnung eine Steuereinrichtung auf, die dazu eingerichtet ist, zu veranlassen, dass in der Transportvorrichtung transportierte Wertdokumentstapel, wahlweise der einen oder der anderen der mindestens zwei Prüfvorrichtungen zugeführt werden, insbesondere in Abhängigkeit der Auslastung einer oder beider der mindestens zwei Prüfvorrichtungen. Die Auslastung der Prüfvorrichtungen betrifft z.B. die freie Bearbeitungskapazität, die die jeweilige Prüfvorrichtung zur Prüfung von Wertdokumenten zu dem jeweiligen Zeitpunkt gerade hat und/ oder vorausschauend, die im unmittelbar bevorstehenden Zeitraum voraussichtlich bestehende freie Bearbeitungskapazität der jeweiligen Prüfvorrichtung zur Prüfung von Wertdokumenten.

### Erste Variante Zuführungsschleife

In einer ersten Variante der erfindungsgemäßen Anordnung ist die der jeweiligen Prüfvorrichtung zugeordnete Transportschnittstelle eine Zuführungsschnittstelle oder eine kombinierte Zuführungs- und Abführungsschnittstelle, die dazu ausgebildet ist, einen (z.B. ungeprüften) Wertdokumentstapel, ggf. zusammen mit einer den jeweiligen mindestens einen Wertdokumentstapel aufnehmenden Wertdokumentaufnahme, von der zyklisch umlaufenden Transportschleife zu der jeweiligen Prüfvorrichtung zuzuführen. Die zyklisch umlaufende Transportschleife kann z.B. eine zyklisch umlaufende Zuführungsschleife für Wertdokumentstapel zu den Prüfvorrichtungen bilden, aus der Wertdokumentstapel, ggf. zusammen mit der den jeweiligen mindestens einen Wertdokumentstapel aufnehmenden Wertdokumentaufnahme, zu der jeweiligen Prüfvorrichtung zugeführt werden können. Insbesondere kann die zyklisch umlaufende Transportschleife, an der sich die Zuführungsschnittstelle befindet, eine kombinierte zyklisch umlaufende Zuführungs- und Abführungsschleife bilden.

Vor der Bearbeitung mit einer Prüfvorrichtung werden die Wertdokumente für die anstehende maschinelle Prüfung üblicherweise an einer oder mehreren Vorbereitungsstationen vorbereitet. Entlang der zyklisch umlaufenden Transportschleife (Zuführungsschleife) sind z.B. eine oder mehrere Transportschnittstellen zu Vorbereitungsstationen vorhanden, durch die die Vorbereitungsstationen mit der zyklisch umlaufenden Transportschleife verbunden sind. Die Transportschnittstelle der jeweiligen Vorbereitungsstation ist dazu eingerichtet, an der Vorbereitungsstation vorbereitete Wertdokumentstapel (z.B. ungeprüfte Wertdokumentstapel), die von einer Prüfvorrichtung geprüft werden sollen, ggf. zusammen mit einer den jeweiligen mindestens einen Wertdokumentstapel aufnehmenden Wertdokumentaufnahme, der zyklisch umlaufenden Transportschleife zuzuführen. Jede Vorbereitungsstation kann ihre eigene Transportschnittstelle haben. Alternativ können aber auch zwei oder mehrere Vorbereitungsstationen über dieselbe Transportschnittstelle mit der zyklisch umlaufenden Transportschleife verbunden sein.

In manchen Ausführungsbeispielen ist die jeweilige Transportschnittstelle der jeweiligen Vorbereitungsstation dazu eingerichtet, einen Wertdokumentstapel in eine der Wertdokumentaufnahmen, die sich in der zyklisch umlaufenden Transportschleife befindet, einzulegen. Beispielsweise weist die Transportschnittstelle der Vorbereitungsstation dazu einen Greifer auf, der den jeweiligen Wertdokumentstapel in die Wertdokumentaufnahme zu einem Zeitpunkt einlegt, während diese Wertdokumentaufnahme in der zyklisch umlaufenden Transportschleife transportiert wird. Alternativ kann die Transportschnittstelle der Vorbereitungsstation auch dazu ausgebildet sein, Wertdokumentstapel mit samt ihrer Wertdokumentaufnahme der zyklisch umlaufenden Transportschleife zuzuführen. Dabei können die (beladenen) Wertdokumentaufnahmen durch einen Greifer oder durch ein Einmündung der zyklisch umlaufenden Transportschleife zugeführt werden. Alternativ dazu kann die Zuführung der mit einem Wertdokumentstapel beladenen Wertdokumentaufnahmen bzw. die Zuführung der Wertdokumentstapel allein (ohne Wertdokumentaufnahme) zur zyklisch umlaufenden Transportschleife auch manuell durchgeführt werden.

Für die Anlieferung der mit Wertdokumentstapeln beladenen Wertdokumentaufnahmen oder Wertdokumentstapel allein (ohne Wertdokumentaufnahme) von der Vorbereitungsstation zur zyklisch umlaufenden Transportschleife kann auch ein selbstfahrendes Transportfahrzeug verwendet werden, welches ggf. selbst die Transportschnittstelle zur zyklisch umlaufenden Transportschleife bilden kann (und dazu z.B. selbst den oben genannten Greifer aufweist). Alternativ kann das selbstfahrende Transportfahrzeug die Wertdokumentstapel bzw. Wertdokumentaufnahmen auch an eine Transportschnittstelle der Vorbereitungsstation übergeben.

Die Transportschnittstellen der Vorbereitungsstationen und der Weiterbearbeitungsvorrichtung zu der zyklisch umlaufenden Transportschleife können analog zu den Transportschnittstellen der Prüfvorrichtung aufgebaut sein, z.B. einen Greifer oder eine Abzweigung und/oder Einmündung aufweisen, die z.B. an eine in der zyklisch umlaufenden Transportschleife enthaltene Transportweiche angeschlossen ist.

Sofern zwei oder mehr Prüfvorrichtungen mit der zyklisch umlaufenden Transportschleife verbunden sind, können die an der Vorbereitungsstation vorbereiteten Wertdokumentstapel mit Hilfe der zyklisch umlaufenden Transportschleife (Zuführungsschleife) auf zwei oder mehr als zwei Prüfvorrichtungen aufgeteilt werden. Dies erlaubt eine zeitgleiche Bearbeitung mehrerer Deposits an verschiedenen Prüfvorrichtungen und/oder eine Aufteilung desselben Deposits auf verschiedene Prüfvorrichtungen. Durch die zyklisch umlaufende Transportschleife wird erreicht, dass wahlweise jede der Wertdokumentaufnahme mit ihrem mindestens einen Wertdokumentstapel zu jeder Prüfvorrichtung zuführbar ist, z.B. in Abhängigkeit davon, welche Prüfvorrichtung gerade freie Bearbeitungskapazitäten hat (welche gerade nicht mit der Prüfung von Wertdokumenten beschäftigt ist). Ein etwaiger Rückstau von Wertdokumentstapeln an einer bestimmten Prüfvorrichtungen wird dadurch vermieden.

Die zyklisch umlaufende Transportschleife bildet einen Pufferspeicher für Wertdokumentstapel, der der jeweiligen Prüfvorrichtung erlaubt, einen Wertdokumentstapel, ggf. zusammen mit der den jeweiligen mindestens einen Wertdokumentstapel aufnehmenden Wertdokumentaufnahme, zu einem variablem Entnahmezeitpunkt aus der zyklisch umlaufenden Transportschleife zu entnehmen. Die Wertdokumentaufnahmen können ggf. mehrmals in derselben Umlaufrichtung an der mindestens einen Prüfeinrichtung vorbeikommen. Somit gibt es für jede einzelne Wertdokumentaufnahme mehrere mögliche Zeitpunkte, an dem der jeweilige Wertdokumentaufnahme über die Transportschnittstelle aus der zyklisch umlaufende Transportschleife entnommen werden kann, um zu einer Prüfvorrichtung zu gelangen. Zum Beispiel kann der jeweilige Wertdokumentstapel beim ersten Umlauf oder erst bei einen späteren Umlauf in der zyklisch umlaufenden Transportschleife zu der jeweiligen Prüfvorrichtung zugeführt werden.

### Zweite Variante Abführungsschleife

In einer zweiten Variante der erfindungsgemäßen Anordnung ist die der jeweiligen Prüfvorrichtung zugeordnete Transportschnittstelle eine Abführungsschnittstelle oder eine kombinierte Zuführungs- und Abführungsschnittstelle, die dazu ausgebildet ist, einen (geprüften) Wertdokumentstapel, ggf. zusammen mit einer den jeweiligen mindestens einen Wertdokumentstapel aufnehmenden Wertdokumentaufnahme, von der jeweiligen Prüfvorrichtung an die zyklisch umlaufenden Transportschleife abzuführen. Nachdem der Wertdokumentstapel (durch die Transportschnittstelle oder durch die Prüfvorrichtung) aus der jeweiligen Wertdokumentaufnahme entnommen wurde, kann die entleerte Wertdokumentaufnahme über die jeweilige Abführungsschnittstelle aus der jeweiligen Prüfvorrichtung zu der zyklisch umlaufenden Transportschleife zurück transportiert werden. Alternativ können auch mit Wertdokumentstapeln beladene Wertdokumentaufnahmen von der jeweiligen Prüfvorrichtung über die Abführungsschnittstelle zu der zyklisch umlaufenden Transportschleife transportiert werden. Entlang der zyklisch umlaufenden Abführungsschleife kann auch mindestens eine Zuführungsschnittstelle zu mindestens einer weiteren Prüfvorrichtung vorhanden sein.

Die zyklisch umlaufende Transportschleife bildet z.B. eine zyklisch umlaufende Abführungsschleife für Wertdokumentstapel, in die die Wertdokumentstapel, ggf. zusammen der den jeweiligen mindestens einen Wertdokumentstapel aufnehmenden Wertdokumentaufnahme, von der jeweiligen Prüfvorrichtung abgeführt werden können. Insbesondere kann die zyklisch umlaufende Transportschleife, an der sich die Abführungsschnittstelle befindet, eine kombinierte zyklisch umlaufende Zuführungs- und Abführungsschleife bilden.

Entlang der zyklisch umlaufenden Transportschleife (Abführungsschleife) ist mindestens eine Transportschnittstelle zu einer Weiterbearbeitungsvorrichtung vorhanden, vorzugsweise mindestens zwei Transportschnittstellen zu mindestens zwei Weiterbearbeitungsvorrichtungen, über die die jeweilige Weiterbearbeitungsvorrichtung mit der zyklisch umlaufenden Transportschleife verbunden ist. Die Transportschnittstelle der jeweiligen Weiterbearbeitungsvorrichtung ist dazu eingerichtet, von einer der Prüfvorrichtungen geprüfte Wertdokumentstapel, ggf. zusammen mit einer den jeweiligen mindestens einen Wertdokumentstapel aufnehmenden Wertdokumentaufnahme, aus der zyklisch umlaufenden Transportschleife abzuführen, damit die Wertdokumentstapel zu der jeweiligen Weiterbearbeitungsvorrichtung transportiert werden können.

Die durch die Weiterbearbeitungsvorrichtung weiterbearbeiteten Wertdokumentstapel können an eine andere Transportvorrichtung abgeführt werden oder von der jeweiligen Weiterbearbeitungsvorrichtung zu derselben zyklisch umlaufenden Transportschleife zurücktransportiert werden, durch die sie zur Weiterbearbeitungsvorrichtung hin transportiert wurden. Die weiterbearbeiteten Wertdokumentstapel können beim Abführen bzw. beim Zurücktransportieren in einer Wertdokumentaufnahme aufgenommen sein oder ohne Wertdokumentaufnahme transportiert werden.

Die Weiterbearbeitungsvorrichtung kann z.B. zum Banderolieren und/oder zum Verpacken von Wertdokumentstapeln ausgebildet sein. Dabei kann ein einzelner oder auch mehrere Wertdokumentstapel in ein gemeinsames banderoliertes Päckchen banderoliert bzw. gemeinsam in dieselbe Verpackung verpackt werden. Alternativ kann die Weiterbearbeitungsvorrichtung zum Vernichten, z.B. Schreddern, nicht-umlauffähiger Wertdokumente ausgebildet sein. Die Weiterbearbeitungsvorrichtung kann auch zum Konfektionieren von Wertdokumenten ausgebildet sein, wobei bestimmte Mengen einer oder mehrerer Sorten von Wertdokumenten (z.B. für die Auslieferung aus einem Cash Center) zusammengestellt werden. Entlang der zyklisch umlaufenden Transportschleife (Abführungsschleife) können Transportschnittstellen zu mehreren gleichartige und/ oder zu mehreren unterschiedlichen der genannten Weiterbearbeitungsvorrichtungen vorhanden sein.

Die an der jeweiligen Prüfvorrichtung geprüften Wertdokumentstapel werden mit Hilfe der zyklisch umlaufenden Transportschleife (Abführungsschleife) beispielsweise auf mindestens zwei Weiterbearbeitungsvorrichtungen aufgeteilt. Dies erlaubt eine zeitgleiche Bearbeitung der geprüften Wertdokumentstapel an verschiedenen Weiterbearbeitungsvorrichtungen. Durch die zyklisch umlaufende Transportschleife wird erreicht, dass wahlweise jede der Wertdokumentaufnahme mit ihrem geprüften Wertdokumentstapel zu jeder Weiterbearbeitungsvorrichtungen zuführbar ist, z.B. in Abhängigkeit davon, welche Weiterbearbeitungsvorrichtungen gerade freie Bearbeitungskapazitäten hat (welche gerade nicht mit der Weiterbearbeitung von Wertdokumenten beschäftigt ist). Ein etwaiger Rückstau von Wertdokumentstapeln an einer bestimmten Weiterbearbeitungsvorrichtung wird dadurch vermieden.

### Besondere Anordnungen

Die Vorbereitungsstationen und/oder Prüfvorrichtungen und/oder Weiterbearbeitungsvorrichtungen können unmittelbar benachbart zu ihrer jeweiligen Transportschnittstelle angeordnet sein, über die sie mit der zyklisch umlaufenden Transportschleife verbunden sind. Sie können aber auch entfernt von ihrer jeweiligen Transportschnittstelle angeordnet sein und mit dieser über eine entsprechende Transporteinrichtung verbunden sein, die die Wertdokumentstapel, ggf. zusammen mit der den jeweiligen mindestens einen Wertdokumentstapel aufnehmenden Wertdokumentaufnahme, zu der Transportschnittstelle der jeweiligen Vorbereitungsstationen bzw. Prüfvorrichtung bzw. Weiterbearbeitungsvorrichtung transportiert.

Insbesondere sind die mindestens eine Prüfvorrichtung und Vorbereitungsstation entlang der zyklisch umlaufenden Transportschleife so angeordnet, dass - in Umlaufrichtung der Wertdokumentaufnahmen entlang der zyklisch umlaufenden Transportschleife betrachtet - nach zumindest einer Transportschnittstelle einer Vorbereitungsstation als nächste Transportschnittstelle die Transportschnittstelle einer Prüfvorrichtung folgt.

Insbesondere sind die Prüfvorrichtungen und Weiterbearbeitungsvorrichtungen entlang der zyklisch umlaufenden Transportschleife so angeordnet, dass - in Umlaufrichtung der Wertdokumentaufnahmen entlang der zyklisch umlaufenden Transportschleife betrachtet - nach zumindest einer Transportschnittstelle einer Prüfvorrichtung als nächste Transportschnittstelle die Transportschnittstelle einer Weiterbearbeitungsvorrichtung folgt. Die Prüfvorrichtungen und/oder Vorbereitungsstationen und/oder Weiterbearbeitungsvorrichtungen sind vorzugsweise alle außerhalb der zyklisch umlaufenden Transportschleife angeordnet. Dies hat den Vorteil, dass diese dann gut zugänglich sind, z.B. im Hinblick auf manuelle Eingriffe oder Wartungsarbeiten der jeweiligen Vorrichtung. Alternativ kann es aber auch vorteilhaft sein, dass eine oder mehrere Prüfvorrichtungen innerhalb der zyklisch umlaufenden Transportschleife angeordnet sind, da dies eine kompaktere Anordnung ermöglicht.

### Alternativweg

In einigen Ausführungsbeispielen weist die zyklisch umlaufende Transportschleife zumindest eine erste Transportschnittstelle, insbesondere eine Abzweigung, zu einem Alternativweg für die Wertdokumentaufnahmen auf (in denen ggf. einen Wertdokumentstapel aufgenommen ist). Der Alternativweg zweigt aus der zyklisch umlaufenden Transportschleife ab und mündet an einer anderen Stelle entlang der zyklisch umlaufenden Transportschleife wieder ein. Entlang der Umlaufrichtung der zyklisch umlaufenden Transportschleife betrachtet nach der ersten Transportschnittstelle weist die zyklisch umlaufende Transportschleife eine zweite Transportschnittstelle, insbesondere eine Einmündung, für die Wertdokumentaufnahmen aus dem Alternativweg auf. Statt einer Abzweigung und Einmündung kann die erste und/oder die zweite Transportschnittstelle zu dem Alternativweg auch durch einen Greifer gebildet werden, der die Wertdokumentstapel, ggf. zusammen mit den Wertdokumentstapel aufnehmenden Wertdokumentaufnahme, zwischen der zyklisch umlaufenden Transportschleife und dem Alternativweg umlädt. Der Alternativweg kann sich an einer zyklisch umlaufenden Zuführungsschleife, an einer zyklisch umlaufenden Abführungsschleife oder an einer kombinierten Zuführungs- und Abführungsschleife befinden. Der Alternativweg umgeht einen Teil der zyklisch umlaufenden Transportschleife, d.h. er ermöglicht es, dass die Wertdokumentaufnahmen bei Bedarf einen Teil der zyklisch umlaufenden Transportschleife umgehen können. In dem vom Alternativweg umgangenen Abschnitt der zyklisch umlaufenden Transportschleife befindet sich üblicherweise eine oder mehrere Transportschnittstellen, z.B. zu Prüf- oder Weiterbearbeitungsvorrichtungen, welche die Wertdokumentaufnahmen durch ihren Transport entlang des Alternativwegs quasi auslassen können.

Der Alternativweg kann länger oder kürzer sein als der vom Alternativweg umgangenen Abschnitt der zyklisch umlaufenden Transportschleife. Vorzugsweise ist der Alternativweg jedoch ein Abkürzungsweg, der kürzer ist als der entlang der zyklisch umlaufenden Transportschleife führende Weg zwischen erster und zweiter Transportschnittstelle, insbesondere zwischen der Abzweigung und der Einmündung des Abkürzungswegs. Der Abkürzungsweg ist ein Alternativweg für die Wertdokumentaufnahmen, der einen Teil der zyklisch umlaufenden Transportschleife umgeht und abkürzt. Der Abkürzungsweg schafft eine zusätzliche Möglichkeit, die Bearbeitungsreihenfolge der Wertdokumentstapel dadurch zu verändern, dass Wertdokumentstapel höherer Priorität über den Abkürzungsweg schneller der Prüfvorrichtung bzw. Weiterbearbeitungsvorrichtung zugeführt werden und früher bearbeitet werden können als Wertdokumentstapel niedrigerer Priorität, die entlang der gesamten zyklisch umlaufenden Transportschleife transportiert werden.

### Auslagerungszweig

In einigen Ausführungsbeispielen weist die zyklisch umlaufende Transportschleife zumindest eine Transportschnittstelle, insbesondere eine Abzweigung und eine Einmündung, zu einem Auslagerungszweig auf, in dem Wertdokumentaufnahmen temporär aus der zyklisch umlaufenden Transportschleife ausgeschleust (ggf. geparkt oder langsam transportiert) werden können und aus dem diese zu einem späteren Zeitpunkt wieder in die zyklisch umlaufende Transportschleife eingeschleust werden können. Der Auslagerungszweig kann sich an einer zyklisch umlaufenden Zuführungsschleife, an einer zyklisch umlaufenden Abführungsschleife oder an einer kombinierten Zuführungs- und Abführungsschleife befinden.

Der Auslagerungszweig bildet eine zusätzliche Möglichkeit, die Bearbeitungsreihenfolge der Wertdokumentstapel dadurch zu verändern, dass Wertdokumentstapel niedrigerer Priorität im Auslagerungszweig temporär zwischengespeichert werden und erst später wieder aus dem Auslagerungszweig heraustransportiert werden, um dann einer Prüfvorrichtung bzw. Weiterbearbeitungsvorrichtung zugeführt zu werden. Der Auslagerungszweig kann einen Abschnitt mit bidirektionalem Transport der Wertdokumentaufnahmen aufweisen, d.h. mit Umkehren der Transportrichtung der Wertdokumentaufnahmen zwischen dem Ausschleusen und Einschleusen.

Alternativ kann der Auslagerungszweig auch von der zyklisch umlaufenden Transportschleife abzweigen und an einer anderen Stelle entlang der zyklisch umlaufenden Transportschleife wieder einmünden und unidirektional sein (d.h. die Wertdokumentaufnahmen kehren zwischen dem Aus- und Einschleusen ihre Transportrichtung nicht um). Der Auslagerungszwei umgeht einen Teil der zyklisch umlaufenden Transportschleife, wobei der Transportweg zwischen der Abzweigung und der Einmündung entlang dem Auslagerungszweig aber üblicherweise länger ist als der Weg entlang der zyklisch umlaufenden Transportschleife. In dem vom Auslagerungszweig umgangenen Abschnitt der zyklisch umlaufenden Transportschleife befindet sich üblicherweise keine Transportschnittstelle.

### Weitere Ausführungsbeispiele

Die zyklisch umlaufende Transportschleife der Anordnung kann eine zyklisch umlaufende Zuführungsschleife für Wertdokumentstapel zu der jeweiligen Prüfvorrichtung bilden und eine andere zyklisch umlaufende Transportschleife der Anordnung kann eine zyklisch umlaufende Abführungsschleife für Wertdokumentstapel aus der jeweiligen Prüfvorrichtung bilden. Zum Beispiel weist die Anordnung für eine oder mehrere Prüfvorrichtungen sowohl eine Zuführungsschnittstelle auf, über die (z.B. ungeprüfte) Wertdokumentstapel, ggf. zusammen mit einer den jeweiligen mindestens einen Wertdokumentstapel aufnehmenden Wertdokumentaufnahme, von einer zyklisch umlaufenden Transportschleife zu der jeweiligen Prüfvorrichtung zugeführt werden können. Die jeweilige Prüfvorrichtung weist außerdem eine von der Zuführungsschnittstelle verschiedene Abführungsschnittstelle auf, über die von der jeweiligen Prüfvorrichtung geprüften Wertdokumentstapel, ggf. zusammen mit einer den jeweiligen mindestens einen Wertdokumentstapel aufnehmenden Wertdokumentaufnahme, von der jeweiligen Prüfvorrichtung an eine andere zyklisch umlaufende Transportschleife abgeführt werden können, (d.h. eine andere zyklisch umlaufenden Transportschleife als die, von der diese Wertdokumentstapel der jeweiligen Prüfvorrichtung über die Zuführungsschnittstelle bzw. über die kombinierte Zuführungs- und Abführungsschnittstelle zugeführt wurden). Die Zuführungsschnittelle und Abführungsschnittstelle können auch durch eine kombinierte Zuführungs- und Abführungsschnittstelle gebildet werden. Die zyklisch umlaufende Zuführungsschleife kann mit mindestens einer Vorbereitungsstation verbunden sein und die zyklisch umlaufenden Abführungsschleife mit mindestens einer Weiterbearbeitungsvorrichtung.

Die Anordnung kann eine oder mehrere der Prüfvorrichtungen sowie die (als zyklisch umlaufende Zuführungsschleife eingerichtete) zyklisch umlaufende Transportschleife und die (als zyklisch umlaufende Abführungsschleife eingerichtete) andere zyklisch umlaufende Transportschleife aufweisen, wobei die beiden zyklisch umlaufenden Transportschleifen voneinander getrennt sind. Jeweils eine Zuführungsschnittstelle der zyklisch umlaufenden Transportschleife bzw. Zuführungsschleife und eine Abführungsschnittstelle der anderen zyklisch umlaufenden Transportschleife bzw. Abführungsschleife befinden sich an derselben Prüfvorrichtung bzw. sind an dieselbe Prüfeinrichtung angeschlossen. So können die Wertdokumente von der zyklisch umlaufenden Transportschleife (Zuführungsschleife) durch Passieren der Prüfvorrichtung, in der die Wertdokumente geprüft werden, direkt in die andere zyklisch umlaufende Transportschleife (Abführungsschleife) transportiert werden. Mindestens eine Prüfvorrichtung ist - in Bezug auf den Transportweg der Wertdokumente - derart zwischen die zyklisch umlaufende Transportschleife (Zuführungsschleife) und die andere zyklisch umlaufende Transportschleife (Abführungsschleife) geschaltet, dass Wertdokumente von der zyklisch umlaufenden Transportschleife (Zuführungsschleife) durch die Zuführungsschnittstelle zu der jeweiligen Prüfvorrichtung und (dieselben Wertdokumente, nach deren Prüfung) von dieser Prüfvorrichtung über die Abführungsschnittstelle zu der andere zyklisch umlaufende Transportschleife (Abführungsschleife) transportierbar sind. Um die Transportwege kurz zu halten, ist die jeweilige, zwischen die beiden zyklisch umlaufenden Transportschleifen dazwischen geschaltete Prüfvorrichtung bevorzugt zwischen den beiden zyklisch umlaufenden Transportschleifen (Zuführungsschleife und Abführungsschleife) angeordnet.

Entlang der zyklisch umlaufenden Transportschleife können sowohl eine oder mehrere Zuführungsschnittstellen zu einer oder mehreren Prüfvorrichtungen vorhanden als auch eine oder mehrere Abführungsschnittstellen von einer oder mehreren Prüfvorrichtungen. Die zyklisch umlaufende Transportschleife kann sowohl eine zyklisch umlaufende Zuführungsschleife für Wertdokumentstapel zu der jeweiligen Prüfvorrichtung als auch eine zyklisch umlaufende Abführungsschleife für Wertdokumentstapel aus der jeweiligen Prüfvorrichtung bilden, also eine kombinierte zyklisch umlaufende Zuführungs-und Abführungsschleife. Die Anordnung weist für eine oder mehrere Prüfvorrichtungen z.B. sowohl eine Zuführungsschnittstelle auf, über die (z.B. ungeprüfte) Wertdokumentstapel, ggf. zusammen mit einer den jeweiligen mindestens einen Wertdokumentstapel aufnehmenden Wertdokumentaufnahme, von der zyklisch umlaufenden Transportschleife zu der jeweiligen Prüfvorrichtung zugeführt werden können, als auch eine Abführungsschnittstelle auf, über die von der jeweiligen Prüfvorrichtung geprüfte Wertdokumentstapel, ggf. zusammen mit einer den jeweiligen mindestens einen Wertdokumentstapel aufnehmenden Wertdokumentaufnahme, an dieselbe zyklisch umlaufende Transportschleife zurücktransportiert werden können, von der diese der jeweiligen Prüfvorrichtung über die Zuführungsschnittstelle zugeführt wurden.

Die Zuführungsschnittstelle und/oder Abführungsschnittstelle der jeweiligen Prüfvorrichtung können durch eine kombinierte Zuführungs- und Abführungsschnittstelle gebildet werden, die dazu eingerichtet ist, den Wertdokumentstapel, ggf. jeweils zusammen mit einer den jeweiligen mindestens einen Wertdokumentstapel aufnehmenden Wertdokumentaufnahme, sowohl von der zyklisch umlaufenden Transportschleife zu der jeweiligen Prüfvorrichtung als auch von der jeweiligen Prüfvorrichtung zu der zyklisch umlaufenden Transportschleife zurück zu transportieren. Bei einer oder mehreren Prüfvorrichtungen weist die kombinierte Zuführungs- und Abführungsschnittstelle der Prüfvorrichtung z.B. einen bidirektionalen Transportabschnitt auf, der sowohl mit einer Abzweigung aus der zyklisch umlaufende Transportschleife als auch mit einer Einmündung in die zyklisch umlaufende Transportschleife verbunden ist, und über den eine oder mehrere Wertdokumentaufnahmen, die jeweils mit mindestens einen Wertdokumentstapel beladen sind, sowohl von der zyklisch umlaufenden Transportschleife zu der jeweiligen Prüfvorrichtung als auch von der jeweiligen Prüfvorrichtung zu der zyklisch umlaufenden Transportschleife transportierbar sind.

Beispielsweise kann die Zuführungsschnittstelle der Prüfvorrichtung oder die kombinierte Zuführungs- und Abführungsschnittstelle der Prüfvorrichtung dazu eingerichtet sein, den Wertdokumentstapel allein, d.h. ohne die Wertdokumentaufnahme, mit der er auf der zyklisch umlaufenden Transportschleife transportiert wird, von der zyklisch umlaufenden Transportschleife an die Prüfvorrichtung und/oder umgekehrt zu übergeben. Alternativ kann sie dazu eingerichtet sein,
- einen von einer Wertdokumentaufnahme aufgenommenen Wertdokumentstapel zusammen mit der Wertdokumentaufnahme von der zyklisch umlaufenden Transportschleife zu übernehmen, und
- den Wertdokumentstapel von der Wertdokumentaufnahme zu trennen (z.B. eine Klemmvorrichtung automatisch zu öffnen und/oder mit einem Greifer aus einem Wertdokumentbehälter zu entnehmen) und der Prüfvorrichtung zuzuführen, und
- die Wertdokumentaufnahme, in der der Wertdokumentstapel aufgenommen war, an die zyklisch umlaufende Transportschleife zurückzugeben.

Beispielsweise ist die jeweilige Transportschnittstelle der jeweiligen Prüfvorrichtung dazu eingerichtet, einen Wertdokumentstapel aus einer der Wertdokumentaufnahmen, die sich in der zyklisch umlaufenden Transportschleife befinden, zu entnehmen, und zu der jeweiligen Prüfvorrichtung zu transportieren und/oder einen Wertdokumentstapel, den die jeweilige Transportschnittstelle aus der Prüfvorrichtung entnimmt, von der jeweiligen Prüfvorrichtung in eine der Wertdokumentaufnahmen, die sich in der zyklisch umlaufenden Transportschleife befindet, einzulegen.

### Greifer

In manchen Ausführungsbeispielen weist die Transportschnittstelle bei einer oder mehreren Prüfvorrichtungen einen Greifer auf, über den die jeweilige Prüfvorrichtung mit der zyklisch umlaufenden Transportschleife verbunden ist. Der Greifer ist dazu eingerichtet, wenn die jeweilige Wertdokumentaufnahme in Reichweite des Greifers ist, jeweils einen Wertdokumentstapel, ggf. zusammen mit einer den jeweiligen mindestens einen Wertdokumentstapel aufnehmenden Wertdokumentaufnahme, von der zyklisch umlaufenden Transportschleife zu entnehmen und den jeweiligen Wertdokumentstapel der jeweiligen Prüfvorrichtung zuzuführen und/oder jeweils einen Wertdokumentstapel, ggf. zusammen mit einer den jeweiligen mindestens einen Wertdokumentstapel aufnehmenden Wertdokumentaufnahme, von der jeweiligen Prüfvorrichtungen zu übernehmen und der zyklisch umlaufenden Transportschleife zuzuführen.

Insbesondere ist der Greifer dazu eingerichtet, den jeweiligen Wertdokumentstapel ohne seine Wertdokumentaufnahme von der zyklisch umlaufenden Transportschleife an die Prüfvorrichtung und/oder von der Prüfvorrichtung an die zyklisch umlaufenden Transportschleife zu übergeben. Beispielsweise kann der Greifer jeweils einen Wertdokumentstapel aus einer der in der zyklisch umlaufenden Transportschleife befindlichen Wertdokumentaufnahmen entnehmen und/ oder in eine in der zyklisch umlaufenden Transportschleife befindliche Wertdokumentaufnahme einlegen. Das Entnehmen bzw. Einlegen des jeweiligen Wertdokumentstapels aus der /in die jeweilige Wertdokumentaufnahme kann durchgeführt werden, während die jeweilige Wertdokumentaufnahme durch die Transportvorrichtung der der zyklisch umlaufenden Transportschleife transportiert wird.

Alternativ kann die Transportvorrichtung der zyklisch umlaufenden Transportschleife, für das Entnehmen bzw. Einlegen (des Wertdokumentstapels bzw. der den Wertdokumentstapel aufnehmenden Wertdokumentaufnahme) mittels Greifer, angehalten werden und der Wertdokumentstapel bzw. die den Wertdokumentstapel aufnehmende Wertdokumentaufnahme bei angehaltener Transportvorrichtung entnommen werden bzw. eingelegt werden. Alternativ kann auch nur der Transport einer bestimmten Wertdokumentaufnahme entlang der zyklisch umlaufenden Transportschleife, zum Entnehmen mittels Greifer, temporär angehalten oder stark abgebremst werden (während die anderen Wertdokumentaufnahmen der zyklisch umlaufenden Transportschleife weitertransportiert werden), und der Wertdokumentstapel aus der angehaltenen Wertdokumentaufnahme entnommen werden.

Alternativ wird der jeweilige Wertdokumentstapel mit dem Greifer erst aus der Wertdokumentaufnahme entnommen bzw. in diese eingelegt, nachdem die jeweilige Wertdokumentaufnahme aus der Transportvorrichtung der zyklisch umlaufenden Transportschleife entfernt wurde, z.B. abgehoben oder ausgeschleust. Das Entfernen der jeweiligen Wertdokumentaufnahme aus der Transportvorrichtung der zyklisch umlaufenden Transportschleife erfolgt z.B. mit Hilfe desselben Greifers wie das Entnehmen bzw. Einlegen des Wertdokumentstapels aus dieser /in diese Wertdokumentaufnahme.

Der Greifer kann an der Transportschnittstelle fest installiert sein. Alternativ kann der Greifer auf einem selbstfahrenden Transportfahrzeug installiert sein, das sich (z.B. temporär) an der Transportvorrichtung der zyklisch umlaufenden Transportschleife befindet. Insbesondere ist die Prüfvorrichtung derart nahe an der Transportschnittstelle angeordnet, dass sich eine Eingabeschnittstelle der Prüfvorrichtung, insbesondere ein Eingabefach, der Prüfvorrichtung in der Reichweite des Greifers befindet und/oder die Prüfvorrichtung ist derart nahe an der Transportschnittstelle angeordnet, dass sich eine Ausgabeschnittstelle der Prüfvorrichtung, insbesondere ein Ausgabefach, der Prüfvorrichtung in der Reichweite des Greifers befindet.

### Kontinuierliches Aus- bzw. Einschleusen

Insbesondere kann bei einer oder mehreren Prüfvorrichtungen die Zuführungsschnittstelle oder die kombinierte Zuführungs- und Abführungsschnittstelle der Prüfvorrichtung eine Abzweigung aufweisen, die derart mit der Transportvorrichtung der zyklisch umlaufenden Transportschleife verbunden ist, dass eine oder mehrere Wertdokumentaufnahmen über die Transportweiche wahlweise entweder kontinuierlich aus der zyklisch umlaufenden Transportschleife in die jeweilige Abzweigung transportiert werden können oder (an der Abzweigung vorbei)) kontinuierlich in der zyklisch umlaufenden Transportschleife weiter transportiert werden können (um ggf. weiter umzulaufen bzw. zu einer weiteren Prüfvorrichtung transportiert zu werden). Zur Verbindung der zyklisch umlaufenden Transportschleife mit der Zuführungsschnittstelle bzw. der kombinierten Zuführungs- und Abführungsschnittstelle kann eine Transportweiche verwendet werden. Die jeweilige Wertdokumentaufnahme, die über die Abzweigung aus der zyklisch umlaufenden Transportschleife abgezweigt wird, wird z.B. zu einer Eingabeschnittstelle einer Prüfvorrichtung transportiert. Das Entnehmen des jeweiligen Wertdokumentstapels aus der abgezweigten Wertdokumentaufnahme erfolgt, wenn sich die jeweilige Wertdokumentaufnahme an der Eingabeschnittstelle der Prüfvorrichtung befindet, z.B. durch eine Entnahmeeinrichtung der Eingabeschnittstelle (z.B. Rechen oder Greifer). Der entnommene Wertdokumentstapel wird anschließend durch die Prüfvorrichtung geprüft.

Insbesondere kann bei einer oder mehreren Prüfvorrichtungen die Abführungsschnittstelle oder die kombinierte Zuführungs- und Abführungsschnittstelle der Prüfvorrichtung eine Einmündung aufweisen, die derart mit der Transportvorrichtung der zyklisch umlaufenden Transportschleife verbunden ist, dass eine oder mehrere Wertdokumentaufnahmen, mit jeweils mindestens einem darin aufgenommenen Wertdokumentstapel, von der Prüfvorrichtung kontinuierlich über die Einmündung in die zyklisch umlaufende Transportschleife transportiert werden können. Die Einmündung ist dazu eingerichtet, eine oder mehrere Wertdokumentaufnahmen mit jeweils mindestens einem darin befindlichem Wertdokumentstapel, der aus der jeweiligen Prüfvorrichtung ausgegeben wurde, zu der zyklisch umlaufenden Transportschleife (Abführungsschleife) hin zu transportieren und an diese zu übergeben. Zur Verbindung der Abführungsschnittstelle bzw. der kombinierten Zuführungs- und Abführungsschnittstelle mit der zyklisch umlaufenden Transportschleife kann eine Transportweiche verwendet werden. Die Übergabe der Wertdokumentaufnahme oder des Wertdokumentstapels an die zyklisch umlaufende Transportschleife kann aber auch durch Hinüberschieben realisiert werden. Der jeweils von einer der Prüfvorrichtungen geprüfte Wertdokumentstapel wird in eine Wertdokumentaufnahme eingelegt, die sich zu diesem Zweck an der Ausgabeschnittstelle der jeweiligen Prüfvorrichtung befindet. Das Einlegen des geprüften Wertdokumentstapel in die Wertdokumentaufnahme erfolgt insbesondere, während sich die jeweilige Wertdokumentaufnahme an einer Ausgabeschnittstelle der Prüfvorrichtung befindet. Das Einlegen der Wertdokumente kann z.B. durch einen an der Ausgabeschnittstelle befindlichen Einlegeinrichtung (z.B. Rechen oder Greifer) erfolgen. Die jeweilige Wertdokumentaufnahme, in der ein von der Prüfvorrichtung geprüfter Wertdokumentstapel eingelegt wurde, wird dann von der Ausgabeschnittstelle der Prüfvorrichtung über die Einmündung in die zyklisch umlaufenden Transportschleife transportiert.

Die Abführungsschnittstelle und die Zuführungsschnittstelle für die jeweilige Prüfvorrichtung können so aneinander angeschlossen sein, dass die Abführungsschnittstelle und die Zuführungsschnittstelle eine weitere zyklisch umlaufende Transportschleife für die Wertdokumentaufnahmen bilden.

### Entgegengesetzte parallele Transportabschnitte

In manchen Ausführungsbeispielen weist die zyklisch umlaufende Transportschleife mindestens zwei zueinander entgegengesetzt gerichtete Transportabschnitte auf, in denen die Wertdokumentaufnahmen in einander entgegengesetzte Richtungen transportiert werden, und die zueinander parallel verlaufen. Zum Beispiel sind die zwei parallelen, entgegengesetzt gerichteten Transportabschnitte der zyklisch umlaufenden Transportschleife untereinander oder unmittelbar nebeneinander angeordnet, vorzugsweise mit einem lateralen Abstand (Abstand in der Ebene der zyklisch umlaufenden Transportschleife) von weniger als 2 m voneinander. Entlang zumindest eines der zwei parallelen, entgegengesetzt gerichteten Transportabschnitte ist mindestens eine erste Transportschnittstelle vorhanden, die insbesondere eine Transportschnittstelle für eine der Prüfvorrichtungen und/oder eine Transportschnittstelle für eine Weiterbearbeitungsvorrichtung und/oder eine Transportschnittstelle für eine Vorbereitungsstation ist. Die erste Transportschnittstelle ist dazu ausgebildet ist, einen Wertdokumentstapel, ggf. zusammen mit einer den jeweiligen mindestens einen Wertdokumentstapel aufnehmenden Wertdokumentaufnahme, über die jeweilige erste Transportschnittstelle aus der zyklisch umlaufenden Transportschleife zu der jeweiligen Prüfvorrichtung bzw. Weiterbearbeitungsvorrichtung zu transportieren und/oder aus der jeweiligen Prüfvorrichtung bzw. Weiterbearbeitungsvorrichtung bzw. Vorbereitungsstation zu der zyklisch umlaufenden Transportschleife zu transportieren. Die erste Transportschnittstelle ist z.B. eine kombinierte Zuführungs- und Abführungsschnittstelle.

Für diejenige Prüfvorrichtung bzw. Weiterbearbeitungsvorrichtung bzw. Vorbereitungsstation, die die erste Transportschnittstelle zu einem der zwei parallelen, entgegengesetzt gerichteten Transportabschnitte aufweist, kann die erste Transportschnittstelle zugleich auch eine Transportschnittstelle zu dem anderen der zwei parallelen, entgegengesetzt gerichteten Transportabschnitte bilden. Beispielsweise kann die erste Transportschnittstelle einen Greifer aufweisen, der auf beide parallelen, entgegengesetzt gerichteten Transportabschnitte zugreifen kann, um Wertdokumentstapel, ggf. zusammen mit einer den jeweiligen mindestens einen Wertdokumentstapel aufnehmenden Wertdokumentaufnahme, aus dem jeweiligen Transportabschnitt zu entnehmen. Alternativ kann diese Prüfvorrichtung bzw. Weiterbearbeitungsvorrichtung bzw. Vorbereitungsstation zusätzlich eine zweite Transportschnittelle zu dem anderen der zwei parallelen, entgegengesetzt gerichteten Transportabschnitte aufweisen. Die zweite Transportschnittstelle ist dazu ausgebildet, einen Wertdokumentstapel, ggf. zusammen mit einer den jeweiligen mindestens einen Wertdokumentstapel aufnehmenden Wertdokumentaufnahme, über die zweite Transportschnittstelle aus dem betreffenden Transportabschnitt der zyklisch umlaufenden Transportschleife zu der jeweiligen Prüfvorrichtung bzw. Weiterbearbeitungsvorrichtung zu transportieren und/ oder aus der jeweiligen Prüfvorrichtung bzw. Weiterbearbeitungsvorrichtung bzw. Vorbereitungsstation zu dem zweiten Transportabschnitt der zyklisch umlaufenden Transportschleife zu transportieren.

### Bypass-Transportweg

In manchen Ausführungsbeispielen weist die Transportvorrichtung entlang der zyklisch umlaufende Transportschleife zumindest eine Transportschnittstelle zu einem Bypass-Transportweg für die Wertdokumentaufnahmen auf, der von der zyklisch umlaufenden Transportschleife zur einer der oben genannten Weiterbearbeitungsvorrichtungen führt und/oder zu einer weiteren Transportvorrichtung (z.B. zu einer anderen zyklisch umlaufenden Transportschleife) führt, die mit mindestens einer der oben genannten Weiterbearbeitungsvorrichtungen verbunden sein kann. Über den Bypass-Transportweg können Wertdokumentaufnahmen (in denen ein oder kein Wertdokumentstapel aufgenommen sein kann) aus der zyklisch umlaufenden Transportschleife zu der Weiterbearbeitungsvorrichtung und/oder zu der anderen zyklisch umlaufenden Transportschleife transportiert werden oder umgekehrt von der Weiterbearbeitungsvorrichtung und/oder von der anderen zyklisch umlaufenden Transportschleife zu der zyklisch umlaufenden Transportschleife transportiert werden. Die Transportschnittstelle zum Bypass-Transportweg kann eine Abzweigung und/ oder eine Einmündung aufweisen oder einen Greifer, der Wertdokumentstapel, ggf. zusammen mit der den mindestens einen Wertdokumentstapel aufnehmenden Wertdokumentaufnahme, zwischen der zyklisch umlaufenden Transportschleife und dem Bypass-Transportweg umlädt. Der Bypass-Transportweg umgeht den Transport der Wertdokumentaufnahmen zu einer Prüfvorrichtung und ermöglicht so, dass Wertdokumentaufnahmen schneller aus der zyklisch umlaufenden Transportschleife abgeführt werden können bzw. dieser zugeführt werden können.

Beispielsweise können über einen Bypass-Transportweg Wertdokumentstapel (z.B. ungeprüft) an den Prüfvorrichtungen vorbei zu einer Weiterbearbeitungsvorrichtung bzw. zu der anderen zyklisch umlaufenden Transportschleife gebracht werden. Über einen anderen Bypass-Transportweg können entleerte Wertdokumentaufnahmen, deren Wertdokumentstapel z.B. an einer Weiterbearbeitungsvorrichtung entnommen wurde, von der Weiterbearbeitungsvorrichtung bzw. von der anderen zyklisch umlaufenden Transportschleife zurück zu der (oben zuerst genannten) zyklisch umlaufenden Transportschleife gebracht werden, aus der die Wertdokumentstapel zuvor einer der Prüfvorrichtungen zugeführt wurden. In einem Ausführungsbeispiel weist die zyklisch umlaufende Transportschleife eine erste Transportschnittstelle zu einem ersten Bypass-Transportweg auf, über den Wertdokumentaufnahmen (in denen ggf. einen Wertdokumentstapel aufgenommen ist) aus der zyklisch umlaufenden Transportschleife zu einer anderen zyklisch umlaufenden Transportschleife transportiert werden und eine zweite Transportschnittstelle zu einem zweiten Bypass-Transportweg auf, über den Wertdokumentaufnahmen (in denen ggf. ein Wertdokumentstapel aufgenommen ist) aus der anderen zyklisch umlaufenden Transportschleife zu der zyklisch umlaufenden Transportschleife zurück transportiert werden können.

### Wertdokumentaufnahmen

Für die Wertdokumentaufnahmen der Wertdokumentstapel sind verschiedene Ausführungsformen denkbar. Die Wertdokumentaufnahme ist bevorzugt dazu ausgebildet, einen Wertdokumentstapel so aufzunehmen, dass - auch beim Transportieren der Wertdokumentaufnahmen durch die Transportvorrichtung - der Wertdokumentstapel stapelförmig bleibt, d.h. dass die Stapelform erhalten bleibt. Die Wertdokumentaufnahmen können fest auf der Transportvorrichtung installiert sein oder von der Transportvorrichtung abnehmbar sein. Die Wertdokumentaufnahmen weisen z.B. eine individuelle Kennung auf, z.B. einen Barcode, einen QR-Code oder ein RFID-Element, um eine sichere Nachverfolgung der Wertdokumentaufnahmen und Wertdokumentstapel zu ermöglichen.

Beispielsweise kann die jeweilige Wertdokumentaufnahme einen Wertdokumentbehälter aufweisen, der dazu ausgebildet ist, in seinem Inneren einen Wertdokumentstapel aufzunehmen, wobei ggf. die Seitenwände und der Boden des Behälters die Stapelform sichern. Der Wertdokumentbehälter kann dazu ausgebildet sein, genau einen Wertdokumentstapel aufzunehmen. Alternativ kann der Wertdokumentbehälter auch zur Aufnahme mehrerer Wertdokumentstapel ausgebildet sein, die in voneinander getrennten Abschnitten des Wertdokumentbehälters aufgenommen sind. Die Wertdokumente können mit ihren Kanten auf dem Boden des Wertdokumentbehälters stehen oder mit ihren Flächen auf dem Boden aufliegen. Alternativ oder zusätzlich kann die jeweilige Wertdokumentaufnahme eine Klemmvorrichtung für Wertdokumentstapel aufweisen, die dazu ausgebildet ist, einen Wertdokumentstapel mittels einer Klemmkraft zu halten, damit die Stapelform erhalten bleibt. Beispielsweise weist die Klemmvorrichtung eine lösbare Klammer für Wertdokumentstapel auf, die einen Wertdokumentstapel gegen eine Federkraft einklemmen kann.

### Transportvorrichtung

Auch für die Transportvorrichtung der zyklisch umlaufenden Transportschleife sind verschiedene Ausführungsformen denkbar. Beispielsweise weist die Transportvorrichtung mindestens ein Förderband auf, auf dem Wertdokumentaufnahmen entlang der zyklisch umlaufenden Transportschleife transportiert werden können, insbesondere mehrere aneinandergereihte Förderbänder. Alternativ oder zusätzlich kann die Transportvorrichtung einen oder mehrere aneinandergereihte Rollenförderer aufweisen, auf dem Wertdokumentaufnahmen entlang der zyklisch umlaufenden Transportschleife transportiert werden können.

### Verfahren

Die Erfindung betrifft auch ein Verfahren zur Bearbeitung von Wertdokumenten mit Hilfe von zwei oder mehreren Prüfvorrichtungen, die zur Prüfung von Wertdokumenten ausgebildet sind, und mit Hilfe einer Transportvorrichtung, die mehrere Wertdokumentaufnahmen transportiert, in denen jeweils mindestens ein Wertdokumentstapel aufgenommen ist. Die Prüfvorrichtungen sind mit der Transportvorrichtung über jeweils mindestens eine Transportschnittstelle verbunden, über die ein oder mehrere Wertdokumentstapel, ggf. zusammen mit einer den jeweiligen mindestens einen Wertdokumentstapel aufnehmenden Wertdokumentaufnahme, von der Transportvorrichtung zu der jeweiligen Prüfvorrichtung und/oder von der jeweiligen Prüfvorrichtung zu der Transportvorrichtung transportiert werden.

Die Transportvorrichtung bildet eine zyklisch umlaufende Transportschleife für die Wertdokumentaufnahmen, wobei die jeweilige Prüfvorrichtung durch die jeweilige Transportschnittstelle mit der zyklisch umlaufenden Transportschleife verbunden ist. Der jeweilige Wertdokumentstapel wird, ggf. zusammen mit einer den jeweiligen mindestens einen Wertdokumentstapel aufnehmenden Wertdokumentaufnahme, über die jeweilige Transportschnittstelle von der zyklisch umlaufenden Transportschleife (unmittelbar) zu der jeweiligen Prüfvorrichtung und/oder von der jeweiligen Prüfvorrichtung (unmittelbar) zu der zyklisch umlaufenden Transportschleife transportiert. Die oben genannten Merkmale gelten nicht nur für die erfindungsgemäße Anordnung, sondern auch für das erfindungsgemäße Verfahren.

Nachfolgend wird die Erfindung anhand der beigefügten Zeichnungen näher erläutert und beschrieben. Es zeigen:
- Fig. 1a: eine schematisierte Darstellung eines Geldkreislaufs; und
- Fig. 1b, c: Ausführungsbeispiele für die Transportvorrichtungen und die Wertdokumentaufnahmen in Seitenansicht;
- Fig. 1d: ein Ausführungsbeispiel für eine Zuführungsschnittstelle und eine Abführungsschnittstelle zu/von einer Prüfvorrichtung in Seitenansicht;
- Fig. 2a, b: in Draufsicht eine zyklisch umlaufende Transportschleife zur Zuführung von Wertdokumentstapeln zu zwei Prüfvorrichtungen (Fig. 2a) und eine zyklisch umlaufende Transportschleife zur Abführung von Wertdokumentstapeln von zwei Prüfvorrichtungen (Fig. 2b);
- Fig. 3: ein Ausführungsbeispiel mit einer zusätzlichen zyklisch umlaufenden Transportschleife mit vielen Vorbereitungsstationen;
- Fig. 4a-c: Ausführungsbeispiele einer Prüfvorrichtung mit kombinierter Zuführungs- und Abführungsschnittstelle (Fig. 4a), mit voneinander getrennter Zuführungs- und Abführungsschnittstelle (Fig. 4b, c);
- Fig. 5a-d: Ausführungsbeispiel für eine kombinierte Zuführungs- und Abführungsschnittstelle mit Greifer;
- Fig. 6: Ausführungsbeispiel für eine zyklisch umlaufende Transportschleife mit Auslagerungszweig;
- Fig. 7a-e: Ausführungsbeispiele für zyklisch umlaufende Transportschleifen mit zueinander parallelen und entgegengesetzt gerichteten Transportabschnitten;
- Fig. 8: ein nicht erfindungsgemäßes Beispiel für eine zyklisch umlaufende Zuführungsschleife und eine zyklisch umlaufende Abführungsschleife, die mit derselben Prüfvorrichtung verbunden sind;
- Fig. 9: Ausführungsbeispiele für Bypass-Transportwege zwischen zwei zyklisch umlaufenden Transportschleifen.

Die erfindungsgemäße Anordnung kann überall dort zum Einsatz kommen, wo mehrere Prüfvorrichtungen zur Prüfung von Wertdokumenten verwendet werden. Die Erfindung betrifft die Bearbeitung von stapelbaren Wertdokumenten, wie z.B. Banknoten, Schecks, Gutscheinen, Tickets, o.ä. Sie wird nachfolgend am Beispiel von Banknoten erläutert, ist aber genauso auch für andere Wertdokumente geeignet, deren maschinelle Bearbeitung durch mehrere Prüfvorrichtungen durchgeführt werden soll.

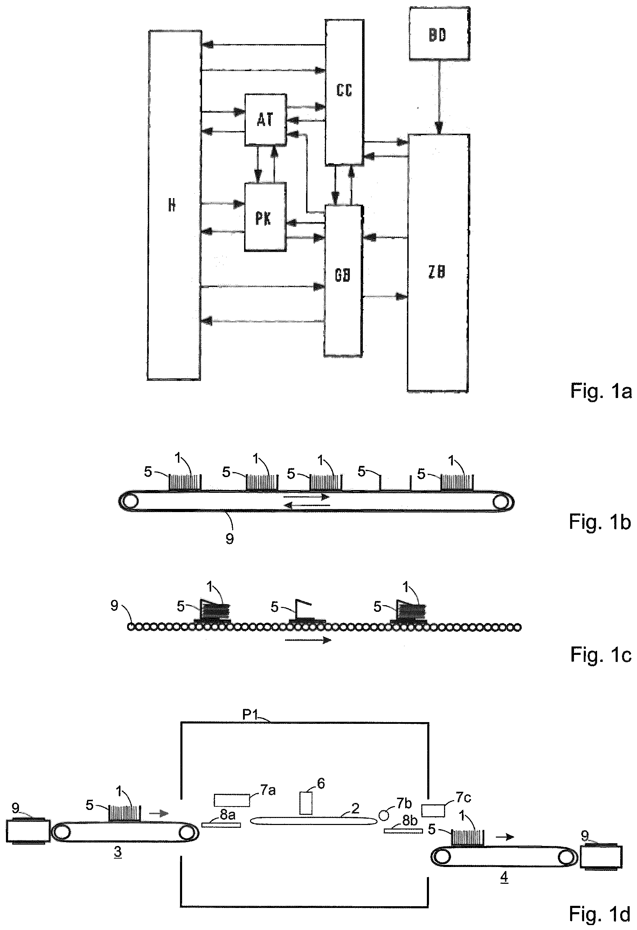

Die Fig. 1a zeigt in schematischer Darstellung einen für Banknoten üblichen Geldkreislauf. In einer Banknotendruckerei BD werden die Banknoten im Auftrag einer Zentralbank ZB hergestellt. Über die Zentralbank ZB werden die fertigen Banknoten in Umlauf gebracht, indem diese an einzelne Geschäftsbanken GB oder an Cash Center CC ausgegeben werden. Händler H (kommerziellen Unternehmen) erhalten ihre Bargeldbestände durch Privatkunden, d.h. Käufer PK, bzw. von den Geschäftsbanken GB. Zur Abrechnung und Überprüfung des eingezahlten Bargelds geben die Händler H ihr Bargeld an die Cash Center CC bzw. Geschäftsbanken GB weiter. Auch die Käufer PK erhalten ihr Bargeld durch die Geschäftsbanken GB. Zudem kann bereits im Umlauf gewesenes Bargeld von den Geschäftsbanken GB und Cash Centern CC wieder an die Zentralbank ZB zurückfließen, um dort gegebenenfalls erneut auf Echtheit und/oder Umlauffähigkeit geprüft zu werden und um nicht mehr umlauffähige Banknoten zu vernichten. Eine wesentliche Aufgabe eines Cash Centers ist die Bearbeitung von Bargeld, insbesondere von Banknoten, welche den Cash Centern CC von ihren Geschäftskunden angeliefert werden. Dies können z.B. Bargeldeinnahmen sein, welche den Cash Centern CC direkt von den Händlern H oder von Geschäftsbanken GB bzw. aus zugehörigen Geldautomaten AT angeliefert werden.

Die Daten eines angelieferten Deposits werden in die zugehörige Cash-Center-Management-Software eines Computers eingegeben, der über Signalleitungen mit Computern an den verschiedenen Stellen im Cash Center verbunden ist. Diese Datenübermittlung findet separat von dem Handling der Transportbehälter bzw. der Wertdokumentstapel im Cash Center statt. Alternativ können die Daten in einen Chip des jeweiligen Transportbehälters abgespeichert und diesem quasi mitgeführt werden. Um eine Zuordnung der Datensätze in der Software zum jeweiligen Deposit zu ermöglichen, kann die individuelle Kennung des jeweiligen Transportbehälters erfasst werden, z.B. durch Einscannen des Barcodes des Transportbehälters. Es kann auch vorgesehen sein, den einzelnen Deposits eine Informationskarte zuzuordnen und beizulegen, die das jeweilige Deposit identifiziert.

Die erfindungsgemäße Anordnung kann insbesondere in einem Cash Center zum Einsatz kommen, in dem die Banknoten durch verschiedene Vorrichtungen bearbeitet werden. Die durch ein Werttransportunternehmen ins Cash Center angelieferten Wertdokumente werden zunächst in Banknoten und Münzen aufgeteilt, die üblicherweise voneinander getrennt maschinell bearbeitet werden. Anschließend werden die Banknoten des jeweiligen Deposits an einer Vorbereitungsstation in Stapelform gebracht. Ggf. erfolgt an der Vorbereitungsstation auch eine erste maschinelle Erfassung des jeweiligen Deposits. An der Vorbereitungsstation wird der vorbereitete Banknotenstapel des jeweiligen Deposits in eine Wertdokumentaufnahme gebracht, insbesondere (separat von den Wertdokumentstapeln anderer Deposits) in einen Transportbehälter eingelegt. Die in den Transportbehältern enthaltenen Banknotenstapel werden anschließend zu den Prüfvorrichtungen transportiert, wo sie dann geprüft werden. Die Prüfung der Banknoten durch die Prüfvorrichtungen kann beispielsweise eine Echtheits- und optional einer Zustandsprüfung der Banknoten umfassen, sowie auch ein Zählen und Sortieren der Banknoten.

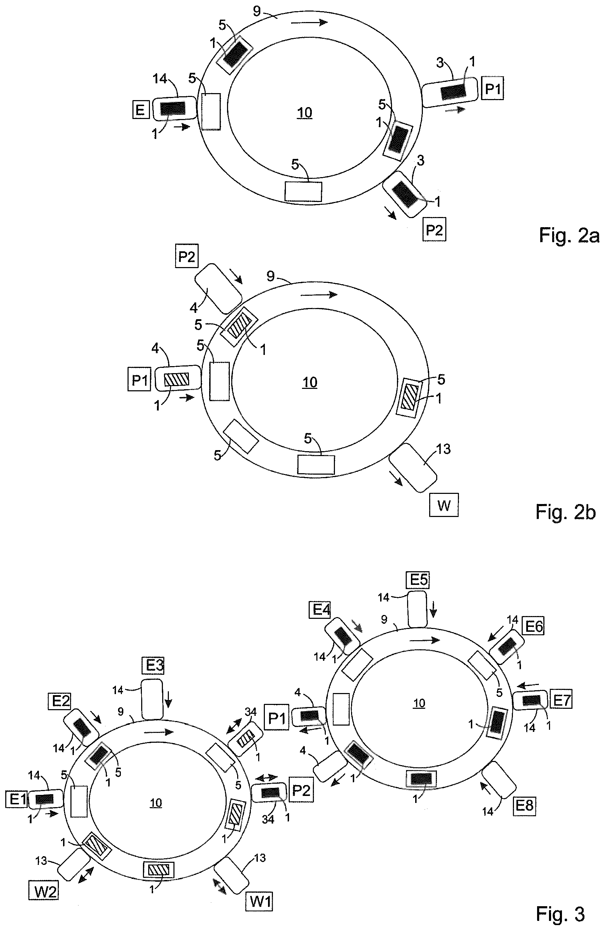

In den Fig. 1b und 1c sind mögliche Realisierungen einer Transportvorrichtung 9 skizziert, durch die Wertdokumentaufnahmen 5, in denen sich jeweils mindestens ein Wertdokumentstapel 1 befindet, entlang einer zyklisch umlaufenden Transportschleife 10, vgl. Fig. 2a,b, transportiert werden können. Die Transportvorrichtung 9 kann z.B. eines oder mehrere Transportbänder, insbesondere Förderbänder, aufweisen, auf der Wertdokumentaufnahmen 5 durch die Bewegung des Förderbands transportiert werden, wie es in Fig. 1b skizziert ist. Die Transportvorrichtung 9 kann aber auch mindestens einen Rollenförder aufweisen, wie in Fig. 1c skizziert. Der Rollenförderer bildet eine Rollenbahn, auf der Wertdokumentaufnahmen 5 durch die Bewegung der Rollen transportiert werden. Die Rollen sind zylinderförmig mit ihrer Achse senkrecht zur Transportrichtung der Wertdokumentaufnahmen. Der oder die Rollenförderer sind ggf. mit Seitenwänden zur seitlichen Führung der Wertdokumentaufnahmen 5 ausgestattet.

An Stelle eines Wertdokumentbehälters 5, wie er in Fig. 1b gezeigt ist, können auch andere Wertdokumentaufnahmen 5 verwendet werden, die nicht behälterförmig sind. Die Wertdokumentaufnahmen können z.B. Klemmvorrichtungen umfassen, wie in Fig. 1c skizziert, die den jeweiligen Wertdokumentstapel 1 mittels Federkraft in Stapelform halten. Beispielsweise wird an der jeweiligen Transportschnittstelle nur die Klemmvorrichtung geöffnet, um den Wertdokumentstapel von der Transportvorrichtung zu entnehmen.

Alternativ wird an der jeweiligen Transportschnittstelle die Klemmvorrichtung mit dem damit geklemmten Wertdokumentstapel von der Transportvorrichtung entnommen, während eine Unterlage der Klemmvorrichtung auf der Transportvorrichtung verbleibt. Alternativ kann zum Entnehmen des Wertdokumentstapels auch die Klemmvorrichtung mit samt der Unterlage von der Transportvorrichtung entnommen werden und beides zusammen bleiben. Ggf. kann die Unterlage der Klemmvorrichtung aber auch wieder auf die Transportvorrichtung zurückgelegt werden.

Alternativ können die Wertdokumentaufnahmen auch Ablagen für Wertdokumentstapel aufweisen, auf den die Wertdokumente mit ihren Flächen aufliegen und die z.B. eine horizontale oder schräge Auflagefläche haben. Die jeweilige Auflagefläche der Wertdokumentaufnahme kann neben dem jeweiligen Wertdokumentstapel mit seitlichen Stegen versehen sein, die den jeweiligen Wertdokumentstapel vor dem Verrutschen sichern, um die Stapelform zu erhalten. Alternativ können die Wertdokumentaufnahmen auch durch die Abschnitte eines Förderbands gebildet werden, die entlang der Umlaufrichtung der Transportvorrichtung über das Transportband verteilt sind, wobei jeweils ein Abschnitt des Förderbands eine Ablage für einen Wertdokumentstapel bildet. Diese Förderbandabschnitte können mit einem oder mehreren Stegen versehen sein, die ein Verrutschen des Wertdokumentstapels 1 verhindern und so dessen Stapelform sichern. Die Förderbandabschnitte, die die Wertdokumentaufnahmen bilden, können jeweils eine individuelle Kennung aufweisen.

In Fig. 1d ist - stark vereinfacht - eine Prüfvorrichtung P1 für Wertdokumente in Seitenansicht skizziert, die zu Prüfung der einzelnen Wertdokumente des jeweiligen Wertdokumentstapels ausgebildet ist. Links in Fig. 1d befindet sich eine Transportvorrichtung 9, die Teil einer zyklisch umlaufenden Transportschleife 10 ist (vgl. Fig. 2a, b). Die Transportvorrichtung 9 transportiert die Wertdokumentbehälter 5 zu einer Zuführungsschnittstelle 3. Über eine Transportweiche oder durch Hinüberschieben mittels eines Schiebeelements (in Fig. 1d nicht gezeigte) wird der jeweilige Wertdokumentbehälter 5 von der Transportvorrichtung 9 in die Zuführungsschnittstelle 3 transportiert, die in diesem Beispiel ein Förderband aufweist.

Mit Hilfe des Förderbands der Zuführungsschnittstelle 3 wird der jeweilige Wertdokumentbehälter 5 auf eine Aufnahmeplatte 8a geschoben, auf der der Wertdokumentbehälter 5 zur Entnahme der Wertdokumente platziert wird. Die Prüfvorrichtung weist eine Entnahmeeinrichtung 7a auf, die Wertdokumente aus dem Wertdokumentbehälter 5 entnimmt und einer Transportstrecke 2 übergibt. Beispielsweise umfasst die Entnahmeeinrichtung 7a eine Vereinzelungseinrichtung, die die Wertdokumente direkt aus dem Wertdokumentbehälter 5 heraus vereinzelt und der Transportstrecke 2 zuführt. Die Entnahmeeinrichtung 7a kann auch zum Öffnen der Wertdokumentbehälter ausgebildet sein. Alternativ kann die Entnahmeeinrichtung 7a auch einen Greifer umfassen, der Wertdokumentstapel 1 aus dem noch auf dem Förderband befindlichen Wertdokumentbehälter 5 entnimmt und auf der Aufnahmeplatte 8a ablegt, und eine Vereinzelungseinrichtung, die die Wertdokumente einzeln von dem auf der Aufnahmeplatte 8a befindlichen Wertdokumentstapel abzieht und der Transportstrecke 2 zuführt.

In der Prüfvorrichtung P1 werden die aus dem Wertdokumentbehälter 5 entnommenen Wertdokumente dann entlang der Transportstrecke 2 einzeln nacheinander an einem oder mehreren Sensoren 6 vorbeitransportiert, die zur Prüfung der Echtheit und ggf. des Zustands der Wertdokumente ausgebildet sind. Optional findet eine Sortierung der Wertdokumente nach Echtheit und/oder Zustand in mehrere Ausgabefächer der Prüfvorrichtung P1 statt. Vor dem jeweiligen Ausgabefach weist die Prüfvorrichtung z.B. ein Staplerrad 7b auf, das die aus der Transportstrecke 2 einzeln ankommenden Wertdokumente auf eine Ablageplatte 8b stapelt. Der auf der Ablageplatte 8b abgelegte, geprüfte Wertdokumentstapel 1 wird anschließend mittels einer Ausgabeeinrichtung in einen Transportbehälter 5 eingelegt, beispielsweise mit Hilfe eines Greifers 7c. Es können aber auch andere Mechanismen zum Einlegen der Wertdokumente in den Wertdokumentbehälter 5 zum Einsatz kommen. Beispielsweise können die aus der Transportstrecke 2 ankommenden Wertdokumente - mit Hilfe eines Staplerrads 7b oder frei fallend - direkt in den jeweiligen Transportbehälter 5 gestapelt werden. Der mit einem Wertdokumentstapel 1beladene Wertdokumentbehälter 5 wird dann über eine Abführungsschnittstelle 4 von der Prüfvorrichtung P1 wegtransportiert und an die in Fig. 1d rechts dargestellte Transportvorrichtung 9 übergeben, die auch Teil einer (derselben oder einer anderen) zyklisch umlaufenden Transportschleife sein kann, z.B. über eine Transportweiche oder durch Hinüberschieben mittels eines Schiebeelements (in Fig. 1d nicht gezeigt).

In Fig. 2a ist eine zyklisch umlaufende Transportschleife 10 gezeigt, die eine zyklisch umlaufende Zuführungsschleife für Wertdokumentstapel zu zwei Prüfvorrichtungen P1 und P2 bildet, und Wertdokumentstapel 1 (oder Wertdokumentaufnahmen 5 mit darin aufgenommenem Wertdokumentstapel) den Prüfvorrichtungen P1, P2 zuführt. In einer nicht erfindungsgemäßen Alternative kann auch nur eine einzige Prüfvorrichtung P1 mit der zyklisch umlaufenden Zuführungsschleife verbunden sein. Die zu prüfenden Wertdokumentstapel 1 (in Fig. 2a wie auch in den weiteren Figuren schwarz gezeichnet) werden - manuell oder automatisch - an einer Vorbereitungsstation E für die maschinelle Prüfung der Wertdokumente vorbereitet und dabei in Stapelform gebracht. Die Vorbereitung der Wertdokumente umfasst z.B. auch ein Überprüfen der Wertdokumente. Bei der manuellen Vorbereitung der Stapel werden üblicherweise Informationen zu den Wertdokumenten erfasst, z.B. Angaben über den Einzahler, eine Kontonummer, eine Transaktionsnummer oder auch die Menge oder der Wert der die Einzahlung bildenden Wertdokumente. Über eine Transportschnittstelle 14 der Vorbereitungsstation E wird der zu prüfende Wertdokumentstapel 1 in eine Wertdokumentaufnahme 5 eingelegt. Die Wertdokumentaufnahmen 5 werden durch die Transportvorrichtung 9 der zyklisch umlaufenden Transportschleife 10 im Uhrzeigersinn von der Transportschnittstelle 14 weg zu den Prüfvorrichtungen P1, P2 transportiert. Zwischen der jeweiligen Prüfvorrichtung und der zyklisch umlaufenden Zuführungsschleife 10 ist jeweils eine Zuführungsschnittstelle 3 angeordnet, die den jeweiligen Wertdokumentstapel 1 allein (also ohne seine Wertdokumentaufnahme 5) oder die jeweilige Wertdokumentaufnahme 5 mit einem darin aufgenommenem Wertdokumentstapel 1 von der zyklisch umlaufenden Zuführungsschleife 10 zu der jeweiligen Prüfvorrichtung transportiert.

Die zyklisch umlaufende Zuführungsschleife 10 erlaubt es, die Bearbeitungsreihenfolge der zu prüfenden Wertdokumentstapel 1 durch die Prüfvorrichtung zu verändern, z.B. falls bestimmte Wertdokumentstapel mit höherer Priorität geprüft werden sollen als andere Wertdokumentstapel. Die mit höherer Priorität zu prüfenden Wertdokumentstapel 1 aus der Zuführungsschleife 10 werden der jeweiligen Prüfvorrichtung zuerst zugeführt, während die anderen zu prüfenden Wertdokumentstapel 1 temporär in der Zuführungsschleife 10 verbleiben und erst bei einem der nächsten Umläufe um die Zuführungsschleife einer der Prüfvorrichtungen P1, P2 zugeführt werden. Wenn, wie hier, zwei Prüfvorrichtungen P1, P2 mit derselben Zuführungsschleife 10 verbunden sind, kann außerdem jeder Wertdokumentstapel 1 zu dessen Prüfung wahlweise der einen Prüfvorrichtung P1 oder der anderen Prüfvorrichtung P2 zugeführt werden, z.B. in Abhängigkeit davon, welche der Prüfvorrichtungen P1, P2 zum jeweiligen Zeitpunkt gerade freie Bearbeitungskapazitäten für diesen Wertdokumentstapel 1 hat.

Die Transportschnittstelle 14 der Vorbereitungsstation E umfasst z.B. einen Greifer, zwischen der jeweiligen Vorbereitungsstation und der zyklisch umlaufenden Transportschleife angeordnet ist und der den zu prüfende Wertdokumentstapel 1 in eine Wertdokumentaufnahme 5 eingelegt. Die Wertdokumentaufnahme 5 kann sich während des Einlegens auf der Transportvorrichtung 9 befinden oder zum Zweck des Einlegens von der Transportvorrichtung 9 entnommen und dann wieder auf die Transportvorrichtung 9 aufgelegt werden. Alternativ zu einem Greifer, kann zwischen der jeweiligen Vorbereitungsstation und der zyklisch umlaufenden Transportschleife auch eine Eimündung angeordnet sein, durch die die Vorbereitungsstation, ggf. über eine Transportweiche an die zyklisch umlaufende Zuführungsschleife 10 angeschlossen ist. Wertdokumentaufnahmen 5, die in der Vorbereitungsstation E manuell oder automatisch mit Wertdokumentstapeln beladen wurden, können über die jeweilige Eimündung kontinuierlich der zyklisch umlaufenden Transportschleife 10 zugeführt werden.

In Fig. 2b ist eine zyklisch umlaufende Transportschleife gezeigt, die eine zyklisch umlaufende Abführungsschleife für Wertdokumentstapel von zwei Prüfvorrichtungen P1 und P2 bildet, und Wertdokumentstapel 1 (oder Wertdokumentaufnahmen 5 mit darin aufgenommenem Wertdokumentstapel) von den Prüfvorrichtungen P1, P2 abführt. Alternativ kann auch nur eine einzige Prüfvorrichtung P1 mit der zyklisch umlaufenden Abführungsschleife verbunden sein. Zwischen der jeweiligen Prüfvorrichtung und der zyklisch umlaufenden Transportschleife 10 ist jeweils eine Abführungsschnittstelle 4 angeordnet, die den jeweiligen Wertdokumentstapel 1 allein (ohne seine Wertdokumentaufnahme 5) oder die jeweilige Wertdokumentaufnahme 5 mit einem darin aufgenommenem Wertdokumentstapel 1 von der jeweiligen Prüfvorrichtung P1, P2 zu der zyklisch umlaufenden Abführungsschleife 10 transportiert. Die geprüften Wertdokumentstapel 1 sind in Fig. 2b wie auch in den weiteren Figuren schraffiert gezeichnet. Die Wertdokumentaufnahmen 5 werden durch die Transportvorrichtung 9 der zyklisch umlaufenden Abführungsschleife 10 im Uhrzeigersinn von der jeweiligen Prüfvorrichtung P1, P2 weg zu einer Transportschnittstelle 13 der Weiterbearbeitungsvorrichtung W transportiert. An der Transportschnittstelle 13 wird der zu prüfende Wertdokumentstapel 1 aus der Wertdokumentaufnahme 5 entnommen. Die Transportschnittstelle 13 der Weiterbearbeitungsvorrichtung W umfasst z.B. einen Greifer, der den zu prüfende Wertdokumentstapel 1 aus der Wertdokumentaufnahme 5 entnimmt, wobei sich die Wertdokumentaufnahme 5 während des Entnehmens auf der Transportvorrichtung 9 befinden kann oder zum Zweck des Entnehmens von der Transportvorrichtung 9 entnommen werden kann und danach wieder auf die Transportvorrichtung 9 aufgelegt wird.

Alternativ kann die Transportschnittstelle 13 der Weiterbearbeitungsvorrichtung auch eine Abzweigung umfassen, über die Wertdokumentaufnahmen 5 mit darin befindlichem geprüftem Wertdokumentstapel 1 kontinuierlich aus der zyklisch umlaufenden Abführungsschleife 10 zur Weiterbearbeitungsvorrichtung W transportiert werden können. Die Weiterbearbeitungsvorrichtung W ist durch die Abzweigung, ggf. über eine Transportweiche, so an die zyklisch umlaufende Abführungsschleife angeschlossen, dass Wertdokumentaufnahmen 5 kontinuierlich von der zyklisch umlaufenden Abführungsschleife 10 über die Abzweigung zu der jeweiligen Weiterbearbeitungsvorrichtung W zuführbar sind.

Die geprüften Wertdokumentstapel 1 werden an der Weiterbearbeitungsvorrichtung W weiterbearbeitet. Die Weiterbearbeitungsvorrichtung ist z.B. zum Banderolieren und/oder zum Verpacken der Wertdokumentstapel in Folie ausgebildet. Durch die zyklisch umlaufende Abführungsschleife 10 wird erreicht, dass jeder Wertdokumentstapel 1 nach dessen Prüfung wahlweise der Weiterbearbeitungsvorrichtung zugeführt werden kann oder - z.B. falls die Weiterbearbeitungsvorrichtung W diesen Wertdokumentstapel gerade nicht weiterbearbeiten kann - temporär in der Abführungsschleife 10 verbleiben kann, bis die Weiterbearbeitungsvorrichtung W diesen Wertdokumentstapel 1 weiterbearbeiten kann. Die zyklisch umlaufende Abführungsschleife 10 erlaubt es außerdem, die Bearbeitungsreihenfolge der geprüften Wertdokumentstapel 1 durch die Weiterbearbeitungsvorrichtung zu verändern, z.B. Wertdokumentstapel einer bestimmten Wertdokumentsorte, die bei der Weiterverarbeitung benötigt werden, gegenüber anderen Wertdokumentstapel zu priorisieren. Die mit höherer Priorität weiterzuverarbeitenden Wertdokumentstapel 1 aus der Abführungsschleife 10 werde der Weiterbearbeitungsvorrichtung W dann zuerst zugeführt, während die anderen Wertdokumentstapel 1 temporär in der Abführungsschleife verbleiben und erst bei einem der nächsten Umläufe um die Abführungsschleife der Weiterbearbeitungsvorrichtung W zugeführt werden. Wenn, wie hier, zwei Prüfvorrichtungen P1, P2 mit derselben Abführungsschleife 10 verbunden sind, wird außerdem damit erreicht, dass die von den verschiedenen Prüfvorrichtungen P1, P2 geprüften Wertdokumentstapel 1 nach deren Prüfung wieder zusammengeführt werden.

Die beiden zyklisch umlaufenden Transportschleifen 10 aus Fig. 2a und 2b können z.B. durch mehrere aneinandergereihte Förderbandabschnitte oder mehrere aneinandergereihte Rollenförder gebildet werden, zwischen denen Wertdokumentaufnahmen 5 jeweils automatisch übergeben werden, z.B. durch Hinüberschieben der Wertdokumentaufnahmen 5. für die jeweilige zyklisch umlaufenden Transportschleife können aber auch andere sowie ggf. verschiedenartige Transporteinrichtungen verwendet werden.

In Fig. 3 ist ein Ausführungsbeispiel mit zwei zyklisch umlaufenden Transportschleifen 10 skizziert, die dieselben beiden Prüfvorrichtungen P1, P2 mit (z.B. ungeprüften) Wertdokumentstapeln beliefern. Die in Fig. 3 links dargestellte zyklisch umlaufende Transportschleife 10 ist eine kombinierte zyklisch umlaufende Zuführungs- und Abführungsschleife, die sowohl zur Zuführung (z.B. ungeprüfter) Wertdokumentstapel 1 (schwarz) zu den Prüfvorrichtungen P1, P2 dient, als auch zur Abführung der von den Prüfvorrichtungen P1, P2 geprüften Wertdokumentstapel 1 (schraffiert). Die Prüfvorrichtungen P1, P2 sind mit dieser jeweils über eine kombinierte Zuführungs-und Abführungsschnittstelle 34 verbunden. An der kombinierte Zuführungs- und Abführungsschleife sind drei Vorbereitungsstationen E1-E3 angeordnet sowie zwei Weiterbearbeitungsvorrichtungen W1, W2. Die in Fig. 3 rechts dargestellte zyklisch umlaufenden Transportschleife 10 ist eine zyklisch umlaufende Zuführungsschleife, an der fünf Vorbereitungsstationen E4-E8 angeordnet sind. Da die Anzahl der Vorbereitungsstationen in Abhängigkeit der Anzahl und Geschwindigkeit der Prüfvorrichtungen gewählt wird, können auch mehr oder weniger Vorbereitungsstationen und/oder mehr als zwei Prüfvorrichtungen in der in Fig. 3 dargestellten Weise verwendet werden.

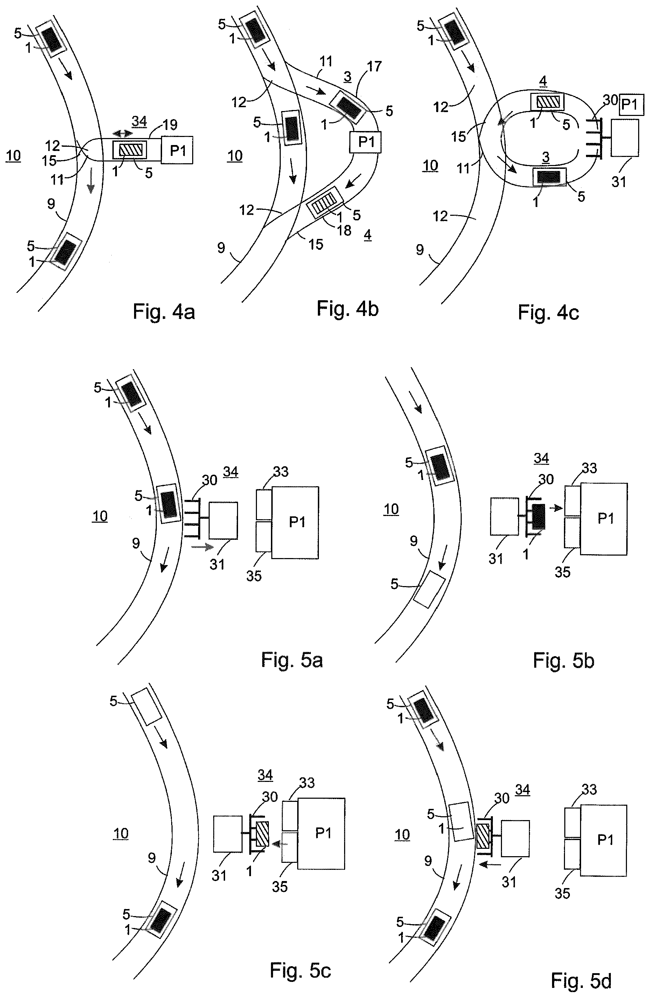

Fig. 4a zeigt ein Ausführungsbeispiel für eine kombinierte Zuführungs- und Abführungsschnittstelle 34 einer Prüfvorrichtung P1, die sowohl eine Abzweigung 11 für die Wertdokumentaufnahmen aus der zyklisch umlaufenden Transportschleife 10 als auch eine Einmündung 15 für die Wertdokumentaufnahmen in die zyklisch umlaufende Transportschleife 10 aufweist.

Die Abzweigung 11 und die Einmündung 15 können über eine Transportweiche 12 an die zyklisch umlaufende Transportschleife 10 angeschlossen sein. Die Zuführungs- und Abführungsschnittstelle 34 der Prüfvorrichtung P1 weist außerdem einen bidirektionalen Transportabschnitt 19 auf, der sowohl mit der Abzweigung 11 als auch mit der Einmündung 15 verbunden ist und über den Wertdokumentaufnahmen wahlweise zur Prüfvorrichtung P1 hin oder von der Prüfvorrichtung P1 weg transportierbar sind.

Fig. 4b zeigt ein Ausführungsbeispiel einer Abführungsschnittstelle 4 für eine Prüfvorrichtung P1, die von der Zuführungsschnittstelle 3 getrennt ist. Die Abzweigung 11 und die Einmündung 15 der Prüfvorrichtung P1 sind jeweils über eine eigene Transportweiche 12 an die zyklisch umlaufende Transportschleife 10 angeschlossen, so dass Wertdokumentaufnahmen 5 (mit darin aufgenommenem Wertdokumentstapel 1) wahlweise entweder über die Abzweigung 11 aus der zyklisch umlaufenden Transportschleife 10 zu einer Eingabeschnittstelle der Prüfvorrichtung P1 zugeführt oder an der Prüfvorrichtung P1 vorbei transportiert werden können. Über die Einmündung 15 werden Wertdokumentaufnahmen 5 aus der Ausgabeschnittstelle der Prüfvorrichtung P1 zur zyklisch umlaufenden Transportschleife 10 abgeführt. Für die Wertdokumentbehälter kann in der Abzweigung 11 eine Warteposition 17 vor der Prüfvorrichtung P1 vorhanden sein, in der eine Wertdokumentaufnahme 5 solange angehalten werden kann, bis die Prüfvorrichtung P1 die Wertdokumentaufnahme 5 annehmen kann. Analog kann nach der Prüfvorrichtung in der Einmündung 15 eine Warteposition 18 vorhanden sein, in der die Wertdokumentaufnahme 5 solange angehalten werden kann bis die Wertdokumentaufnahme 5 in die zyklisch umlaufende Transportschleife10 eingeschleust werden kann.

Bei dem Ausführungsbeispiel der Fig. 4c befinden sich die Abzweigung 11 für die Wertdokumentaufnahmen aus der zyklisch umlaufenden Transportschleife 10 und die Einmündung 15 für die Wertdokumentaufnahmen in die zyklisch umlaufende Transportschleife 10 an derselben Stelle der zyklisch umlaufenden Transportschleife 10. Vorteilhaft kann daher das Abzweigen und Einmünden der Wertdokumentaufnahmen 5 durch dieselbe Transportweiche gesteuert werden. Die Abführungsschnittstelle 4 und die Zuführungsschnittstelle 3 für die Prüfvorrichtung P1 sind so aneinander angeschlossen, dass die Abführungsschnittstelle 4 und die Zuführungsschnittstelle 3 eine weitere zyklisch umlaufenden Transportschleife für die Wertdokumentaufnahmen bilden. Dies hat den Vorteil eines geringen Platzbedarfs für die Abzweigung und Einmündung und vermeidet gleichzeitig, die Transportrichtung der Wertdokumentaufnahmen umkehren zu müssen. Die Umlaufrichtung dieser weiteren zyklisch umlaufenden Transportschleife ist umgekehrt (hier gegen den Uhrzeigersinn) zu der Umlaufrichtung der zyklisch umlaufenden Transportschleife 10 (hier im Uhrzeigersinn). An derjenigen Stelle dieser weiteren zyklisch umlaufenden Transportschleife, die der Prüfvorrichtung P1 am nächsten liegt, können die Wertdokumentaufnahmen anhalten und Wertdokumente entnommen und/oder eingelegt werden, z.B. durch einen mittels Roboter 31 bewegten Greifer 30, der ungeprüfte Wertdokumente der Prüfvorrichtung P1 zuführt bzw. geprüfte Wertdokumente von der Prüfvorrichtung P1 abführt. Alternativ kann die Prüfvorrichtung P1 auch direkt an der Abführungsschnittstelle 4 und an der Zuführungsschnittstelle 3 angeschlossen sein, z.B. endet die Zuführungsschnittstelle 3 an einer Eingabeschnittstelle der Prüfvorrichtung P1 und beginnt die Abführungsschnittstelle 4 an einer Ausgabeschnittstelle der Prüfvorrichtung P1.

In Fig. 5a-d ist ein weiteres Ausführungsbeispiel für eine kombinierte Zuführungs- und Abführungsschnittstelle 34 skizziert, die in diesem Fall einen Greifer 30 aufweist, der zum Greifen der Wertdokumentstapel 1 verwendet wird. Der Greifer 30 hat zwei rechenartige Greifelemente, zwischen denen ein Wertdokumentstapel 1 geklemmt wird. Er wird durch eine geeignete Kinematik 31, z.B. einen Roboter, zweidimensional oder dreidimensional im Raum bewegt, um jeweils einen Wertdokumentstapel 1 von einer in der zyklisch umlaufenden Transportschleife 10 befindlichen Wertdokumentaufnahmen 5 zu entnehmen und in ein Eingabefach 33 der Prüfvorrichtung P1 einzulegen und umgekehrt, um jeweils einen geprüften Wertdokumentstapel 1 aus einem Ausgabefach 35 der Prüfvorrichtung P1 zu entnehmen und in eine in der zyklisch umlaufenden Transportschleife 10 befindliche Wertdokumentaufnahme 5 einzulegen.

Fig. 5a zeigt die Situation zu dem Zeitpunkt, kurz bevor der Greifer 30 einen (z.B. ungeprüften) Wertdokumentstapel 1 aus der Wertdokumentaufnahme 5 entnimmt, die durch die Transportvorrichtung 9 der zyklisch umlaufenden Transportschleife 10 herantransportiert wird. Fig. 5b zeigt die Situation etwas später, nachdem der Greifer 30 den Wertdokumentstapel 1 von der zyklisch umlaufenden Transportschleife 10 entnommen hat, kurz bevor der Greifer den entnommenen Wertdokumentstapel 1 in das Eingabefach 33 der Prüfvorrichtung P1 einlegt. Fig. 5c zeigt die Situation nach der Prüfung eines Wertdokumentstapels 1 durch die Prüfvorrichtung P1, zu dem Zeitpunkt, zu dem der Greifer den geprüften Wertdokumentstapel 1 gerade aus dem Ausgabefach 35 der Prüfvorrichtung P1 entnommen hat. Fig. 5d zeigt die Situation kurz bevor der Greifer 30 den geprüften Wertdokumentstapel 1 in eine Wertdokumentaufnahme 5 einlegt, die sich um Zeitpunkt des Einlegens in der zyklisch umlaufenden Transportschleife 10 befindet.

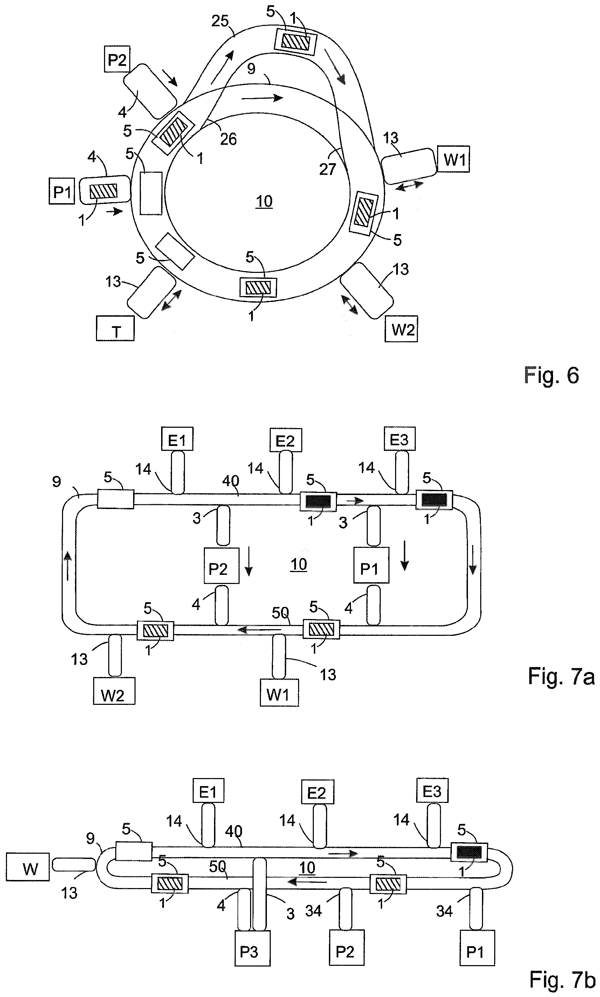

Das Ausführungsbeispiel aus Fig. 6 basiert auf dem aus Fig. 2b. Im Unterschied dazu sind hier jedoch zwei Weiterbearbeitungsvorrichtungen W1, W2 über eine jeweilige Transportschnittstelle 13 mit der zyklisch umlaufenden Abführungsschleife 10 verbunden. Beispielsweise handelt es sich bei den Weiterbearbeitungsvorrichtungen um zwei Verpackungsvorrichtungen W1, W2, die jeweils Wertdokumentstapel 1 einer bestimmten Wertdokumentsorte verpacken, und zwar eine vorgegebene Menge an Wertdokumenten einer bestimmten Sorte. Falls einer der Verpackungsvorrichtungen W1, W2 zu einem bestimmten Zeitpunkt nur ein Teil der vorgegebenen Menge der jeweiligen Wertdokumentsorte zur Verfügung steht, ermöglicht die zyklisch umlaufende Abführungsschleife eine Selektion der richtigen Wertdokumentsorte für die jeweilige Verpackungsvorrichtung. Die passende Wertdokumentsorte kann dadurch selektiert werden, dass die Wertdokumentstapel 1 anderer Wertdokumentsorten auf der Abführungsschleife 10 vorbei gelassen werden und erst ein solcher Wertdokumentstapel 1, der die richtige (von der Verpackungsvorrichtung benötigte) Wertdokumentsorte hat, der jeweiligen Verpackungsvorrichtung zugeführt wird.

Ferner ist in Fig. 6 in Umlaufrichtung stromabwärts zu den Weiterbearbeitungsvorrichtungen W1, W2 ein Wertdokumentspeicher T, z.B. ein Tresor oder ähnliches, vorhanden, der ebenfalls über eine Transportschnittstelle 13, mit der zyklisch umlaufenden Abführungsschleife 10 verbunden ist. Darin können geprüfte, weiterbearbeitete Wertdokumentstapel 1 temporär gelagert werden, aber ggf. auch solche geprüfte Wertdokumentstapel 1, die direkt aus einer der Prüfvorrichtungen P1, P2 kommen, aber nicht weiterbearbeitet wurden. Ferner weist die zyklisch umlaufende Abführungsschleife 10 aus Fig. 6 einen Auslagerungszweig 25 mit einer Abzweigung 26 und einer Einmündung 27 auf, in dem Wertdokumentaufnahmen 5, ggf. mit darin aufgenommenem Wertdokumentstapel 1, temporär aus der zyklisch umlaufenden Abführungsschleife 10 ausgeschleust und zu einem späteren Zeitpunkt wieder in dahin eingeschleust werden können. Dieser Auslagerungszweig 25 erlaubt ein Zwischenparken bestimmter Wertdokumentstapel 1, die mit geringer Priorität bearbeitet werden.

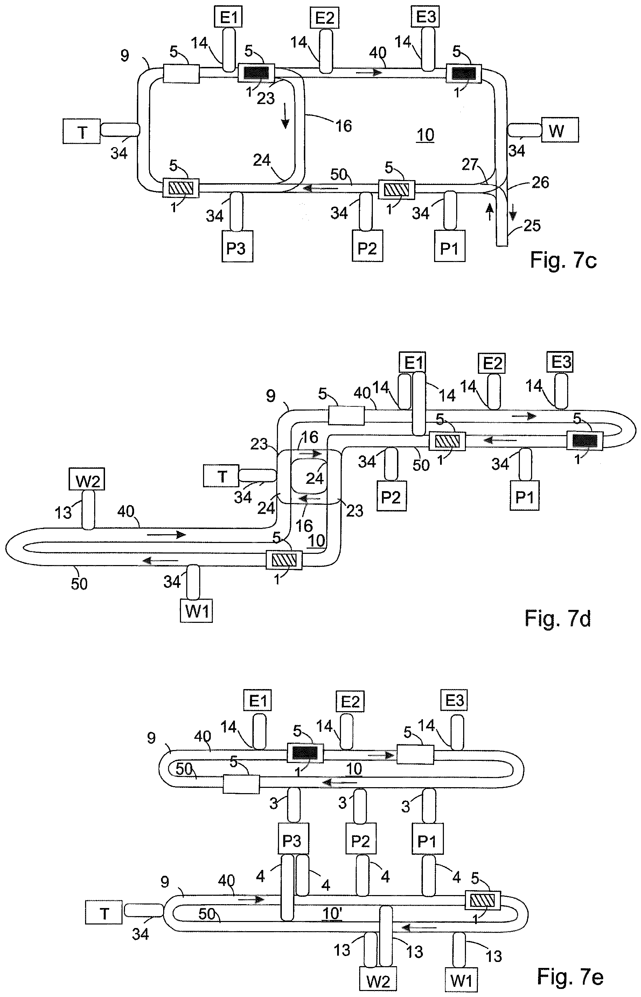

In Fig. 7a-e sind weitere Ausführungsbeispiele dargestellt, bei denen die zyklisch umlaufende Transportschleife 10 zumindest zwei entgegengesetzt gerichtete Transportabschnitte 40, 50 hat, die zueinander parallel sind. In Fig. 7a-d handelt es sich jeweils um eine kombinierte Zuführungs- und Abführungsschleife 10, in Fig. 7e um voneinander getrennte Zuführungs- und Abführungsschleifen 10, 10'. In Fig. 7a sind zwei Prüfvorrichtungen P1, P2 im Inneren der Transportschleife 10 angeordnet. Die Vorbereitungsstationen E1-E3 sowie die Weiterbearbeitungsvorrichtungen W1, W2 sind außerhalb der zyklisch umlaufenden Transportschleife 10 angeordnet.

Bei dem Ausführungsbeispiel aus Fig. 7b weisen die beiden entgegengesetzt gerichteten zueinander parallelen Transportabschnitte 40, 50 einen lateralen Abstand von nur etwa 1 m voneinander auf. Dies erlaubt, dass eine oder mehrere Prüfvorrichtungen mit jeweils einer Transportschnittstelle zu beiden parallelen Transportabschnitte ausgestattet werden kann. Hier hat z.B. die Prüfvorrichtung P3 eine Zuführungsschnittstelle 3 vom oberen der beiden parallelen Transportabschnitte 40 und eine Abführungsschnittstelle 4 zum unteren der beiden parallelen Transportabschnitte 50. Dies erlaubt eine schnelle Zuführung von Wertdokumentstapeln 1, die aus der Vorbereitungsstation E1 kommen. Auch die Bearbeitungsreihenfolge der Wertdokumentstapel 1 kann so verändert werden.

Bei dem Ausführungsbeispiel aus Fig. 7c weist die zyklisch umlaufende Transportschleife 10 einen Abkürzungsweg 16 auf, über den (z.B. ungeprüfte) Wertdokumentstapel 1 der Vorbereitungsstation E1 schneller der Prüfvorrichtung P3 zugeführt werden können als wenn diese von der Vorbereitungsstation E1 entlang des rechten Teils der zyklisch umlaufenden Transportschleife 10 zur Prüfvorrichtung P3 transportiert werden. Auch die Bearbeitungsreihenfolge der Wertdokumentstapel 1 kann so verändert werden. Der Abkürzungsweg 16 ist durch eine Abzweigung 23 und eine Einmündung 24 mit der zyklisch umlaufenden Transportschleife 10 verbunden, die ggf. über eine Transportweiche an diese angeschlossen sind. Außerdem weist die zyklisch umlaufende Transportschleife 10 einen Auslagerungszweig 25 mit Abzweigung 26 und Einmündung 27 auf, in dem Wertdokumentstapel 1 mit ihrer Wertdokumentaufnahme 5 temporär aus der zyklisch umlaufenden Abführungsschleife 10 geparkt und zu einem späteren Zeitpunkt wieder in diese eingeschleust werden können.

Bei dem Ausführungsbeispiel aus Fig. 7d gibt es in der zyklisch umlaufenden Transportschleife 10 ein oberes und ein unteres Paar zueinander paralleler und entgegengesetzt gerichteter Transportabschnitte 40, 50 mit einem lateralen Abstand von weniger als 2 m. Am oberen Paar 40, 50 befinden sich Zuführungsschnittstellen 14 zu Vorbereitungsstationen E1-E3 und kombinierte Zu- und Abführungsschnittstellen 34 zu Prüfvorrichtungen P1, P2. Am unteren Paar 40, 50 befinden sich eine Abführungsschnittstelle 13 und eine kombinierte Zu- und Abführungsschnittstelle 34 zu Weiterbearbeitungsvorrichtungen W1, W2. Ferner gibt es bei der zyklisch umlaufenden Transportschleife 10 der Fig. 7d zwei Abkürzungswege 16. Der untere Abkürzungsweg 16 ermöglicht eine schnellere Zuführung von geprüften Wertdokumentstapeln 1, die aus den Prüfvorrichtungen P1, P2 kommen, zu dem Wertdokumentspeicher T als entlang der zyklisch umlaufenden Transportschleife 10. Der obere Abkürzungsweg 16 ermöglicht eine schnellere Zuführung von (z.B. geprüften, im Wertdokumentspeicher T zwischengelagerten, aber noch nicht weiterbearbeiteten) Wertdokumentstapeln 1 aus dem Wertdokumentspeicher T zu den Weiterbearbeitungsvorrichtungen W1, W2 als entlang der zyklisch umlaufenden Transportschleife 10.

Bei dem Ausführungsbeispiel aus Fig. 7e sind die Prüfvorrichtungen P1-P3 zusätzlich mit eine anderen zyklisch umlaufenden Transportschleife 10' verbunden, in diesem Fall mit einer zyklisch umlaufenden Abführungsschleife 10' (unten), die von der zyklisch umlaufende Zuführungsschleife 10 (oben) getrennt ist. Beide enthalten zwei zueinander parallele entgegengesetzt gerichtete Transportabschnitte 40, 50. Die Prüfvorrichtungen P1-P3 befinden sich zwischen der zyklisch umlaufenden Zuführungsschleife 10 und der zyklisch umlaufenden Abführungsschleife 10'. Die Prüfvorrichtung P3 hat eine zusätzliche Abführungsschnittstelle 4 zum unteren parallelen Transportabschnitt 50 der zyklisch umlaufenden Abführungsschleife 10', um in dem Fall, wenn viele bearbeitete Wertdokumentstapel 1 aus den Prüfvorrichtungen P1-P3 in der zyklisch umlaufenden Abführungsschleife 10 kommen, einige bearbeitete Wertdokumentstapel 1 - ohne Weiterbearbeitung - direkt in den Wertdokumentspeicher T zu schicken. Zur Entlastung des rechten Teils der zyklisch umlaufenden Abführungsschleife 10' hat die Weiterbearbeitungsvorrichtung W2 eine zusätzliche Transportschnittstelle 13 zum oberen Transportabschnitt 40.

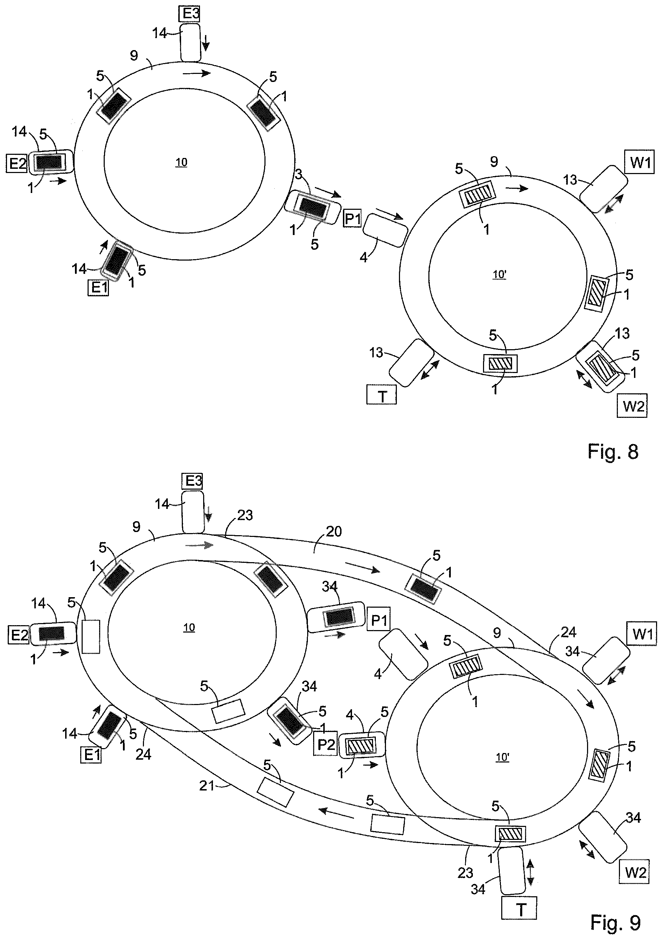

Auch bei dem nicht erfindungsgemäßen Beispiel aus Fig. 8 sind die zyklisch umlaufende Zuführungsschleife 10 und die zyklisch umlaufende Abführungsschleife 10' voneinander getrennt. Bei diesem Beispiel wird nur eine einzige Prüfvorrichtung P1 verwendet. Die Zuführung (z.B. ungeprüfter) Wertdokumentstapel 1 zu der Prüfvorrichtung P1 erfolgt aus der zyklisch umlaufende Zuführungsschleife 10, die Ausgabe geprüfter Wertdokumentstapel 1 in die zyklisch umlaufende Abführungsschleife 10'. Die Zuführung der (z.B. ungeprüften) Wertdokumentstapel 1 von der zyklisch umlaufende Zufüh-rungsschleife 10 zur Prüfvorrichtung P1 und die Abführung der geprüften Wertdokumentstapel 1 von der Prüfvorrichtung P1 zu der zyklisch umlaufende Abführungsschleife 10' erfolgen in diesem Beispiel zusammen mit der jeweiligen Wertdokumentaufnahme 5 (z.B. wie zu Fig. 4a-c erläutert). Gleiches gilt auch für die Zuführung aus den Vorbereitungsstationen E1-E3 und die Abführung zu den Weiterbearbeitungsvorrichtungen W1, W2. Die Prüfvorrichtung P1 kann die entleerte Wertdokumentaufnahme 5, die von der zyklisch umlaufenden Zuführungsschleife 10 kommt, zum Beladen mit von der Prüfvorrichtung geprüften Wertdokumentstapeln verwenden und die wiederbeladene Wertdokumentaufnahme 5 zur zyklisch umlaufenden Abführungsschleife 10' schicken. In Bezug auf das Ausführungsbeispiel aus Fig. 8 ist auch denkbar, dass zur Abführung der geprüften Wertdokumentstapel 1 aus der Prüfvorrichtung P1 diese ggf. durch andere Wertdokumentaufnahmen 5 aufgenommen werden und über die jeweilige Abführungsschnittelle 4 zur zyklisch umlaufenden Abführungsschleife 10' gebracht werden. Die Zuführung und/oder Abführung der Wertdokumentstapel 1 von der/zu der Prüfvorrichtung P1 kann auch ohne die jeweilige Wertdokumentaufnahme 5 erfolgen (z.B. durch Greifer wie zu Fig. 5 erläutert).

Bei dem Ausführungsbeispiel aus Fig. 9 gibt die jeweilige Prüfvorrichtung P1, P2, nach der Entnahme des jeweiligen Wertdokumentstapels 1, Wertdokumentaufnahmen 5 über eine Transportschnittstelle 34 (vgl. Fig. 4a) an die zyklisch umlaufende Zuführungsschleife 10 zurück, damit diese an den Vorbereitungsstationen E1-E3 erneut beladen werden können. Außerdem sind bei diesem Ausführungsbeispiel zwei Bypass-Transportwege 20, 21 vorhanden, durch die die zyklisch umlaufende Zuführungsschleife 10 mit der zyklisch umlaufenden Abführungsschleife 10' verbunden ist. Über den oberen Bypass-Transportweg 20 können Wertdokumentaufnahmen 5 mit darin aufgenommenen (z.B. ungeprüften) Wertdokumentstapeln 1 an den Prüfvorrichtungen P1, P2 vorbei, zur zyklisch umlaufenden Abführungsschleife 10' gelangen, also ohne dass die betreffenden Wertdokumente einer Prüfung durch die Prüfvorrichtungen P1, P2 unterzogen werden. Über den unteren Bypass-Transportweg 21 können leere Wertdokumentaufnahmen 5 (ohne darin aufgenommenem Wertdokumentstapel) aus der zyklisch umlaufenden Abführungsschleife 10', an den Prüfvorrichtungen P1, P2 vorbei, zur zyklisch umlaufenden Zuführungsschleife 10 zurückgelangen, damit diese (an den Vorbereitungsstationen) erneut beladen werden können.

## Patentansprüche

1. Anordnung zur Bearbeitung von Wertdokumenten, mit
- einer Transportvorrichtung (9) für Wertdokumentaufnahmen, die dazu ausgebildet ist, mehrere Wertdokumentaufnahmen (5), durch die jeweils mindestens ein Wertdokumentstapel (1) aufnehmbar ist, entlang einer Umlaufrichtung zu transportieren,
- zwei oder mehrere mit der Transportvorrichtung (9) verbundene Prüfvorrichtungen (P1, P2, P3) zur Prüfung von Wertdokumenten,
wobei die Anordnung für jede der Prüfvorrichtungen (P1, P2, P3) mindestens eine Transportschnittstelle (3, 4, 34) aufweist, durch die die jeweilige Prüfvorrichtung mit der Transportvorrichtung (9) so verbunden ist,
dass Wertdokumentstapel (1), ggf. zusammen mit einer den jeweiligen mindestens einen Wertdokumentstapel aufnehmenden Wertdokumentaufnahme (5), über die jeweilige Transportschnittstelle (3, 4, 34) von der Transportvorrichtung (9) zu der jeweiligen Prüfvorrichtung (P1, P2, P3) und/oder von der jeweiligen Prüfvorrichtung (P1, P2, P3) zu der Transportvorrichtung (9) transportierbar sind,
- wobei die Transportvorrichtung (9) eine zyklisch umlaufende Transportschleife (10) für die Wertdokumentaufnahmen (5) bildet, die derart in sich geschlossen ist, dass die in der zyklisch umlaufenden Transportschleife befindlichen Wertdokumentaufnahmen diese mehrmals in derselben Umlaufrichtung durchlaufen können, und
- wobei die jeweilige Prüfvorrichtung (P1, P2, P3) durch die jeweilige Transportschnittstelle (3, 4, 34) derart mit der zyklisch umlaufenden Transportschleife (10) verbunden ist, dass der jeweilige Wertdokumentstapel (1), ggf. zusammen mit der den jeweiligen mindestens einen Wertdokumentstapel aufnehmenden Wertdokumentaufnahme (5), über die jeweilige Transportschnittstelle (3, 4, 34) von der zyklisch umlaufenden Transportschleife (10) zu der jeweiligen Prüfvorrichtung (P1, P2, P3) und/oder von der jeweiligen Prüfvorrichtung (P1, P2, P3) zu der zyklisch umlaufenden Transportschleife (10) transportierbar ist, **dadurch gekennzeichnet,**
- **dass** die Anordnung dazu ausgebildet ist, Wertdokumentstapel je nach Bedarf, zu einem variablem Zeitpunkt, zwischen der zyklisch umlaufenden Transportschleife und der jeweiligen Prüfvorrichtung bzw. umgekehrt auszutauschen, und
- **dass** die Anordnung eine Steuereinrichtung aufweist, die dazu eingerichtet ist, zu veranlassen, dass in der Transportvorrichtung (9) transportierte Wertdokumentstapel, wahlweise der einen oder der anderen der mindestens zwei Prüfvorrichtungen (P1, P2) zugeführt werden, insbesondere in Abhängigkeit einer Auslastung mindestens einer der mindestens zwei Prüfvorrichtungen.

2. Anordnung nach Anspruch 1, **dadurch gekennzeichnet, dass** die Anordnung entlang der zyklisch umlaufenden Transportschleife (10) eine erste Transportschnittstelle (23) zu einem Alternativweg (16) für die Wertdokumentaufnahmen (5) aufweist und - entlang der Umlaufrichtung der zyklisch umlaufenden Transportschleife (10) betrachtet nach der ersten Transportschnittstelle (23) - eine zweite Transportschnittstelle (24) für die Wertdokumentaufnahmen zu dem Alternativweg (16) aufweist, wobei der Alternativweg (16) insbesondere ein Abkürzungsweg (16) ist, der kürzer ist als der Weg zwischen der ersten Transportschnittstelle (23) und der zweiten Transportschnittstelle (24), der entlang der zyklisch umlaufenden Transportschleife (10) führt.

3. Anordnung nach zumindest einem der vorherigen Ansprüche, **dadurch gekennzeichnet, dass** die Anordnung entlang der zyklisch umlaufenden Transportschleife (10) zumindest eine Transportschnittstelle (26, 27) zu einem Auslagerungszweig (25) aufweist, in den Wertdokumentaufnahmen (5), ggf. mit mindestens einem darin aufgenommenem Wertdokumentstapel, temporär aus der zyklisch umlaufenden Transportschleife (10) ausgeschleust und aus dem diese zu einem späteren Zeitpunkt wieder in die zyklisch umlaufende Transportschleife (10) eingeschleust werden können.

4. Anordnung nach zumindest einem der vorherigen Ansprüche, **dadurch gekennzeichnet, dass** die Anordnung für mindestens eine der Prüfvorrichtungen (P1, P2, P3) als jeweilige Transportschnittstelle eine Zuführungsschnittstelle (3) oder eine kombinierte Zuführungs- und Abführungsschnittstelle (34) aufweist, die dazu ausgebildet ist, einen Wertdokumentstapel (1), ggf. zusammen mit einer den jeweiligen mindestens einen Wertdokumentstapel aufnehmenden Wertdokumentaufnahme (5), von der zyklisch umlaufenden Transportschleife (10) zu der jeweiligen Prüfvorrichtung (P1, P2, P3) zuzuführen.

5. Anordnung nach zumindest einem der vorherigen Ansprüche, **dadurch gekennzeichnet, dass** die Anordnung für mindestens eine der Prüfvorrichtungen (P1, P2, P3) als jeweilige Transportschnittstelle eine Abführungsschnittstelle (4) oder eine kombinierte Zuführungs- und Abführungsschnittstelle (34) aufweist, die dazu ausgebildet ist, einen Wertdokumentstapel (1), ggf. zusammen mit einer den jeweiligen mindestens einen Wertdokumentstapel aufnehmenden Wertdokumentaufnahme (5), von der jeweiligen Prüfvorrichtung (P1, P2, P3) an die zyklisch umlaufenden Transportschleife (10) abzuführen.

6. Anordnung nach Anspruch 5, **dadurch gekennzeichnet, dass** die Anordnung entlang der zyklisch umlaufenden Transportschleife (10) mindestens eine Transportschnittstelle zu einer Weiterbearbeitungsvorrichtung (W, W1-W2) aufweist, durch die die jeweilige Weiterbearbeitungsvorrichtung (W, W1-W2) mit der zyklisch umlaufenden Transportschleife (10) verbunden ist, wobei die Transportschnittstelle (13) der jeweiligen Weiterbearbeitungsvorrichtung dazu eingerichtet ist, von einer der Prüfvorrichtungen geprüfte Wertdokumentstapel (1), ggf. zusammen mit einer den jeweiligen mindestens einen Wertdokumentstapel aufnehmenden Wertdokumentaufnahme (5), aus der zyklisch umlaufenden Transportschleife (10) abzuführen, um die Wertdokumentstapel zu der jeweiligen Weiterbearbeitungsvorrichtung (W, W1-W2) transportieren zu können.

7. Anordnung nach zumindest einem der vorherigen Ansprüche,
**dadurch gekennzeichnet, dass** die Anordnung für mindestens eine der Prüfvorrichtungen (P1, P2, P3) jeweils
- sowohl eine Zuführungsschnittstelle (3) aufweist, über die Wertdokumentstapel (1), ggf. zusammen mit einer den jeweiligen mindestens einen Wertdokumentstapel aufnehmenden Wertdokumentaufnahme, von der zyklisch umlaufenden Transportschleife zu der jeweiligen Prüfvorrichtung (P1, P2, P3) zugeführt werden können,
- als auch eine Abführungsschnittstelle (4) aufweist, über die von der jeweiligen Prüfvorrichtung geprüfte Wertdokumentstapel (1), ggf. zusammen mit einer den jeweiligen mindestens einen Wertdokumentstapel aufnehmenden Wertdokumentaufnahme, von der jeweiligen Prüfvorrichtung (P1, P2, P3) an eine andere zyklisch umlaufende Transportschleife (10') abgeführt werden können,
wobei die mindestens eine Prüfvorrichtung (P1, P2, P3) insbesondere derart zwischen die zyklisch umlaufende Transportschleife (10) und die andere zyklisch umlaufende Transportschleife (10') geschaltet ist, dass Wertdokumente von der zyklisch umlaufenden Transportschleife (10), durch die Zuführungsschnittstelle zu der jeweiligen Prüfvorrichtung (P1, P2, P3) und von dieser Prüfvorrichtung über die Abführungsschnittstelle zu der anderen zyklisch umlaufenden Transportschleife (10') transportierbar sind.

8. Anordnung nach zumindest einem der vorherigen Ansprüche, **dadurch gekennzeichnet, dass** die Anordnung für mindestens eine der Prüfvorrichtungen jeweils
- sowohl eine Zuführungsschnittstelle (3) aufweist, über die Wertdokumentstapel (1), ggf. zusammen mit einer den jeweiligen mindestens einen Wertdokumentstapel aufnehmenden Wertdokumentaufnahme (5), von der zyklisch umlaufenden Transportschleife (10) zu der jeweiligen Prüfvorrichtung (P1, P2, P3) zugeführt werden können,
- als auch eine Abführungsschnittstelle (4) aufweist, über die von der jeweiligen Prüfvorrichtung geprüfte Wertdokumentstapel (1), ggf. zusammen mit einer den jeweiligen mindestens einen Wertdokumentstapel aufnehmenden Wertdokumentaufnahme (5), an dieselbe zyklisch umlaufende Transportschleife (10) abgeführt werden können, aus der diese der jeweiligen Prüfvorrichtung (P1, P2, P3) zugeführt wurden.

9. Anordnung nach zumindest einem der vorherigen Ansprüche, **dadurch gekennzeichnet, dass** bei mindestens einer der Prüfvorrichtungen die Transportschnittstelle (3, 4, 34) einen Greifer (30) aufweist, der dazu ausgebildet ist,
- jeweils einen Wertdokumentstapel (1), ggf. zusammen mit einer den jeweiligen mindestens einen Wertdokumentstapel aufnehmenden Wertdokumentaufnahme (5), von der zyklisch umlaufenden Transportschleife (10) zu entnehmen und den jeweiligen Wertdokumentstapel (1) der jeweiligen Prüfvorrichtung (P1, P2, P3) zuzuführen und/oder
- jeweils einen Wertdokumentstapel (1), ggf. zusammen mit einer den jeweiligen mindestens einen Wertdokumentstapel aufnehmenden Wertdokumentaufnahme (5), von der jeweiligen Prüfvorrichtungen (P1, P2, P3) zu übernehmen und der zyklisch umlaufenden Transportschleife (10) zuzuführen.

10. Anordnung nach zumindest einem der vorherigen Ansprüche, **dadurch gekennzeichnet, dass** die Anordnung für mindestens eine der Prüfvorrichtungen jeweils eine kombinierte Zuführungs- und Abführungsschnittstelle (34) aufweist, die dazu eingerichtet ist, Wertdokumentstapel (1), ggf. jeweils zusammen mit einer den jeweiligen mindestens einen Wertdokumentstapel aufnehmenden Wertdokumentaufnahme (5), sowohl von der zyklisch umlaufenden Transportschleife(10) zu der jeweiligen Prüfvorrichtung (P1, P2, P3) als auch von der jeweiligen Prüfvorrichtung (P1, P2, P3) zu der zyklisch umlaufenden Transportschleife (10) zu transportieren.

11. Anordnung nach zumindest einem der vorhergehenden Ansprüche, **dadurch gekennzeichnet, dass** bei mindestens einer der Prüfvorrichtungen (P1, P2, P3) die jeweilige Transportschnittstelle (3, 4, 34) der jeweiligen Prüfvorrichtung dazu eingerichtet ist, eine Wertdokumentaufnahme (5), zusammen mit mindestens einem durch diese aufgenommenen Wertdokumentstapel (1), kontinuierlich von der zyklisch umlaufenden Transportschleife (10) über die Transportschnittstelle (3, 34) zu der jeweiligen Prüfvorrichtung und/oder kontinuierlich von der jeweiligen Prüfvorrichtung über die Transportschnittstelle (4, 34) zu der zyklisch umlaufenden Transportschleife (1) zu transportieren.

12. Anordnung nach zumindest einem der Ansprüche 5 oder 10, **dadurch gekennzeichnet, dass** bei mindestens einer der Prüfvorrichtungen die Abführungsschnittstelle (4) oder die kombinierte Zuführungs- und Abführungsschnittstelle (34) der Prüfvorrichtung (P1, P2, P3) eine Einmündung (15) aufweist, die derart mit der Transportvorrichtung (9) der zyklisch umlaufenden Transportschleife (10) verbunden ist, dass eine oder mehrere Wertdokumentaufnahmen mit jeweils mindestens einem darin aufgenommenen Wertdokumentstapel (1) von der Prüfvorrichtung (P1, P2, P3) kontinuierlich über die Einmündung (15) in die zyklisch umlaufende Transportschleife (10) transportiert werden können.

13. Anordnung nach zumindest einem der vorherigen Ansprüche,
**dadurch gekennzeichnet, dass** die zyklisch umlaufende Transportschleife (10) mindestens zwei zueinander entgegengesetzt gerichtete Transportabschnitte (40, 50) aufweist, in denen die Wertdokumentaufnahmen (5) in einander entgegengesetzte Richtungen transportiert werden können, und die zueinander parallel verlaufen, wobei vorzugsweise die zwei parallelen, entgegengesetzt gerichteten Transportabschnitte (40, 50) der zyklisch umlaufenden Transportschleife (10) untereinander oder nebeneinander angeordnet sind,
wobei entlang zumindest eines der zwei parallelen, entgegengesetzt gerichteten Transportabschnitte (40, 50) mindestens eine erste Transportschnittstelle (3, 4, 34, 13, 14) vorhanden ist, insbesondere eine Transportschnittstelle (3, 4, 34) einer der Prüfvorrichtungen und/oder eine Transportschnittstelle (13) einer der Weiterbearbeitungsvorrichtungen (W, W1-W2) und/oder eine Transportschnittstelle (14) einer der Vorbereitungsstationen (E, E1-E8), wobei die erste Transportschnittstelle dazu ausgebildet ist, einen Wertdokumentstapel, ggf. zusammen mit einer den jeweiligen mindestens einen Wertdokumentstapel aufnehmenden Wertdokumentaufnahme,
- über die jeweilige erste Transportschnittstelle (3, 4, 34, 13, 14) aus der zyklisch umlaufenden Transportschleife (10) zu der jeweiligen Prüfvorrichtung bzw. Weiterbearbeitungsvorrichtung zu transportieren und/oder
- über die jeweilige erste Transportschnittstelle (3, 4, 34, 13, 14) aus der jeweiligen Prüfvorrichtung bzw. Weiterbearbeitungsvorrichtung bzw. Vorbereitungsstation zu der zyklisch umlaufenden Transportschleife (10) zu transportieren.

14. Anordnung nach zumindest einem der vorherigen Ansprüche, **dadurch gekennzeichnet, dass** die Transportvorrichtung entlang der zyklisch umlaufenden Transportschleife (10) zumindest eine Transportschnittstelle, insbesondere eine Abzweigung (23), zu einem Bypass-Transportweg (20, 21) für die Wertdokumentaufnahmen (5) aufweist, der von der zyklisch umlaufenden Transportschleife (10) weg zur einer Weiterbearbeitungsvorrichtung (W, W1-W2) und/oder zu einer anderen zyklisch umlaufenden Transportschleife (10') führt, wobei insbesondere
- Wertdokumentstapel (1), zusammen mit der den jeweiligen Wertdokumentstapel (1) aufnehmenden Wertdokumentaufnahme (5), von der zyklisch umlaufenden Transportschleife (10) über den Bypass-Transportweg (20) zu einer Weiterbearbeitungsvorrichtung (W, W1-W2) und/oder zu der anderen zyklisch umlaufenden Transportschleife (10) transportiert werden können, ohne dass der jeweilige Wertdokumentstapel durch eine der Prüfvorrichtungen (P1, P2, P3) geprüft wird, oder
- Wertdokumentaufnahmen (5) ohne darin aufgenommenen Wertdokumentstapel (1) von der anderen zyklisch umlaufenden Transportschleife (10') über den Bypass-Transportweg (21) zu der zyklisch umlaufenden Transportschleife (10) transportiert werden können.

15. Verfahren zur Bearbeitung von Wertdokumenten mit Hilfe von zwei oder mehreren Prüfvorrichtungen (P1, P2, P3) zur Prüfung von Wertdokumenten und mit Hilfe einer Transportvorrichtung (9), mit der die jeweilige Prüfvorrichtung über jeweils mindestens eine Transportschnittstelle (3, 4, 34) verbunden ist, wobei bei dem Verfahren
- die Transportvorrichtung (9) mehrere Wertdokumentaufnahmen (5), in denen jeweils mindestens ein Wertdokumentstapel (1) aufgenommen ist, entlang einer Umlaufrichtung transportiert, und
- die jeweilige Transportschnittstelle (3, 4, 34) die Wertdokumentstapel (1), ggf. zusammen mit einer den jeweiligen mindestens einen Wertdokumentstapel aufnehmenden Wertdokumentaufnahme (5), von der Transportvorrichtung (9) zu der jeweiligen Prüfvorrichtung (P1, P2, P3) und/oder von der jeweiligen Prüfvorrichtung (P1, P2, P3) zu der Transportvorrichtung (9) transportiert,
- wobei die Transportvorrichtung (9) eine zyklisch umlaufende Transportschleife (10) für die Wertdokumentaufnahmen (5) bildet, die derart in sich geschlossen ist, dass die in der zyklisch umlaufenden Transportschleife befindlichen Wertdokumentaufnahmen diese mehrmals in derselben Umlaufrichtung durchlaufen können, und die jeweilige Prüfvorrichtung (P1, P2, P3) durch die jeweilige Transportschnittstelle mit der zyklisch umlaufenden Transportschleife (10) verbunden ist, und
- die jeweilige Transportschnittstelle (3, 4, 34) den jeweilige Wertdokumentstapel (1), ggf. zusammen mit einer den jeweiligen mindestens einen Wertdokumentstapel aufnehmenden Wertdokumentaufnahme (5), von der zyklisch umlaufenden Transportschleife (10) zu der jeweiligen Prüfvorrichtung (P1, P2, P3) und/oder von der jeweiligen Prüfvorrichtung (P1, P2, P3) zu der zyklisch umlaufenden Transportschleife (10) transportiert,
**dadurch gekennzeichnet, dass** in der Transportvorrichtung (9) transportierte Wertdokumentstapel wahlweise der einen oder der anderen der mindestens zwei Prüfvorrichtungen (P1, P2) zugeführt werden, insbesondere in Abhängigkeit einer Auslastung mindestens einer der mindestens zwei Prüfvorrichtungen, und die Wertdokumentstapel je nach Bedarf, zu einem variablem Zeitpunkt, zwischen der zyklisch umlaufenden Transportschleife und der jeweiligen Prüfvorrichtung bzw. umgekehrt ausgetauscht werden, wobei bei dem Verfahren die Wertdokumentstapel (1) bzw. Wertdokumentaufnahme (5) insbesondere mit Hilfe der Anordnung nach einem oder mehreren der Ansprüche 1-14 gemäß einem oder mehreren der Ansprüche 1-14 transportiert werden.

## Claims

1. Arrangement for processing valuable documents, comprising
- a transport device (9) for valuable-document receptacles, which is designed to transport several valuable-document receptacles (5), each of which can receive at least one valuable-document stack (1), along a direction of circulation,
- two or more checking devices (P1, P2, P3), which are connected to the transport device (9), for checking valuable documents, wherein the arrangement has at least one transport interface (3, 4, 34) for each of the checking devices (P1, P2, P3), the respective checking device being connected by the at least one transport interface to the transport device (9) such that valuable-document stacks (1), possibly together with a valuable-document receptacle (5) which receives the respective at least one valuable-document stack, can be transported via the respective transport interface (3, 4, 34) from the transport device (9) to the respective checking device (P1, P2, P3) and/or from the respective checking device (P1, P2, P3) to the transport device (9),
- wherein the transport device (9) forms a cyclically circulating transport loop (10) for the valuable-document receptacles (5), which transport loop is closed in such a way that the valuable-document receptacles located in the cyclically circulating transport loop can run through this transport loop several times in the same circulation direction, and
- wherein the respective checking device (P1, P2, P3) is connected by the respective transport interface (3, 4, 34) to the cyclically circulating transport loop (10) in such a way that the respective valuable-document stack (1), possibly together with the valuable-document receptacle (5) which receives the respective at least one valuable-document stack, can be transported via the respective transport interface (3, 4, 34) from the cyclically circulating transport loop (10) to the respective checking device (P1, P2, P3) and/or from the respective checking device (P1, P2, P3) to the cyclically circulating transport loop (10), **characterized**
- **in that** the arrangement is designed to exchange valuable-document stacks as required at a variable time between the cyclically circulating transport loop and the respective checking device or vice versa, and
- **in that** the arrangement has a control device which is configured to cause valuable-document stacks which are transported in the transport device (9) to be selectively fed to one or the other of the at least two checking devices (P1, P2), in particular depending on a utilization of at least one of the at least two checking devices.

2. Arrangement according to Claim 1, **characterized in that** the arrangement has a first transport interface (23) to an alternative path (16) for the valuable-document receptacles (5) along the cyclically circulating transport loop (10) and - as viewed downstream of the first transport interface (23) along the circulation direction of the cyclically circulating transport loop (10) - a second transport interface (24) for the valuable-document receptacles to the alternative path (16), wherein the alternative path (16) is in particular a shortcut (16), which is shorter than the path between the first transport interface (23) and the second transport interface (24), which leads along the cyclically circulating transport loop (10).

3. Arrangement according to at least one of the preceding claims, **characterized in that** the arrangement has, along the cyclically circulating transport loop (10), at least one transport interface (26, 27) to a removal branch (25), in which valuable-document receptacles (5), possibly with at least one valuable-document stack received therein, are temporarily ejected from the cyclically circulating transport loop (10) and from which these valuable-document receptacles can be reintroduced into the cyclically circulating transport loop (10) at a later time.

4. Arrangement according to at least one of the preceding claims, **characterized in that** the arrangement has, for at least one of the checking devices (P1, P2, P3), as the respective transport interface, a feed interface (3) or a combined feed and discharge interface (34) which is designed to feed a valuable-document stack (1), possibly together with a valuable-document receptacle (5) which receives the respective at least one valuable-document stack, from the cyclically circulating transport loop (10) to the respective checking device (P1, P2, P3).

5. Arrangement according to at least one of the preceding claims, **characterized in that** the arrangement has, for at least one of the checking devices (P1, P2, P3), as the respective transport interface, a discharge interface (4) or a combined feed and discharge interface (34), which is designed to discharge a valuable-document stack (1), possibly together with a valuable-document receptacle (5) which receives the respective at least one valuable-document stack, from the respective checking device (P1, P2, P3) to the cyclically circulating transport loop (10).

6. Arrangement according to Claim 5, **characterized in that** the arrangement has at least one transport interface to a further-processing device (W, W1-W2) along the cyclically circulating transport loop (10), the respective further-processing device (W, W1-W2) being connected to the cyclically circulating transport loop (10) by the at least one transport interface, wherein the transport interface (13) of the respective further-processing device is configured to discharge valuable-document stacks (1) which have been checked by one of the checking devices, possibly together with a valuable-document receptacle (5) which receives the respective at least one valuable-document stack, from the cyclically circulating transport loop (10) in order to be able to transport the valuable-document stacks to the respective further-processing device (W, W1-W2).

7. Arrangement according to at least one of the preceding claims, **characterized in that** the arrangement has, for at least one of the checking devices (P1, P2, P3), in each case
- both a feed interface (3), via which valuable-document stacks (1), possibly together with a valuable-document receptacle which receives the respective at least one valuable-document stack, can be fed from the cyclically circulating transport loop to the respective checking device (P1, P2, P3),
- and also a discharge interface (4), via which valuable-document stacks (1) which have been checked by the respective checking device, possibly together with a valuable-document receptacle which receives the respective at least one valuable-document stack, can be discharged from the respective checking device (P1, P2, P3) to another cyclically circulating transport loop (10'),
wherein the at least one checking device (P1, P2, P3) is connected between the cyclically circulating transport loop (10) and the other cyclically circulating transport loop (10') in particular in such a way that valuable documents can be transported from the cyclically circulating transport loop (10) to the respective checking device (P1, P2, P3) by the feed interface and from this checking device to the other cyclically circulating transport loop (10') via the discharge interface.

8. Arrangement according to at least one of the preceding claims, **characterized in that** the arrangement has, for at least one of the checking devices, in each case
- both a feed interface (3), via which valuable-document stacks (1), possibly together with a valuable-document receptacle (5) which receives the respective at least one valuable-document stack, can be fed from the cyclically circulating transport loop (10) to the respective checking device (P1, P2, P3),
- and also a discharge interface (4), via which valuable-document stacks (1) which have been checked by the respective checking device, possibly together with a valuable-document receptacle (5) which receives the respective at least one valuable-document stack, can be discharged to the same cyclically circulating transport loop (10) from which the valuable-document stacks were fed to the respective checking device (P1, P2, P3).

9. Arrangement according to at least one of the preceding claims, **characterized in that**, in at least one of the checking devices, the transport interface (3, 4, 34) has a gripper (30), which is designed to
- remove in each case a valuable-document stack (1), possibly together with a valuable-document receptacle (5) which receives the respective at least one valuable-document stack, from the cyclically circulating transport loop (10) and feed the respective valuable-document stack (1) to the respective checking device (P1, P2, P3) and/or
- transfer in each case a valuable-document stack (1), possibly together with a valuable-document receptacle (5) which receives the respective at least one valuable-document stack, from the respective checking devices (P1, P2, P3) and feed it to the cyclically circulating transport loop (10).

10. Arrangement according to at least one of the preceding claims, **characterized in that** the arrangement for at least one of the checking devices in each case has a combined feed and discharge interface (34), which is configured to transport valuable-document stacks (1), possibly each together with a valuable-document receptacle (5) which receives the respective at least one valuable-document stack, both from the cyclically circulating transport loop (10) to the respective checking device (P1, P2, P3) and from the respective checking device (P1, P2, P3) to the cyclically circulating transport loop (10).

11. Arrangement according to at least one of the preceding claims, **characterized in that**, in at least one of the checking devices (P1, P2, P3), the respective transport interface (3, 4, 34) of the respective checking device is configured to transport a valuable-document receptacle (5), together with at least one valuable-document stack (1) received by this valuable-document receptacle, continuously from the cyclically circulating transport loop (10), via the transport interface (3, 34), to the respective checking device and/or continuously from the respective checking device, via the transport interface (4, 34), to the cyclically circulating transport loop (1).

12. Arrangement according to at least one of Claims 5 and 10, **characterized in that**, in at least one of the checking devices, the discharge interface (4) or the combined feed and discharge interface (34) of the checking device (P1, P2, P3) has an opening (15), which is connected to the transport device (9) of the cyclically circulating transport loop (10) in such a way that one or more valuable-document receptacles, each with at least one valuable-document stack (1) received therein, can be continuously transported from the checking device (P1, P2, P3), via the opening (15), into the cyclically circulating transport loop (10).

13. Arrangement according to at least one of the preceding claims, **characterized in that** the cyclically circulating transport loop (10) has at least two transport sections (40, 50) which are directed in opposite directions to each other, in which the valuable-document receptacles (5) can be transported in opposite directions to each other and which run parallel to each other, wherein the two parallel, oppositely directed transport sections (40, 50) of the cyclically circulating transport loop (10) are preferably arranged one beneath the other or next to each other,
wherein at least one first transport interface (3, 4, 34, 13, 14) is present along at least one of the two parallel, oppositely directed transport sections (40, 50), in particular a transport interface (3, 4, 34) of one of the checking devices and/or a transport interface (13) of one of the further-processing devices (W, W1-W2) and/or a transport interface (14) of one of the preparation stations (E, E1-E8), wherein the first transport interface is designed to transport a valuable-document stack, possibly together with a valuable-document receptacle which receives the respective at least one valuable-document stack,
- via the respective first transport interface (3, 4, 34, 13, 14) from the cyclically circulating transport loop (10) to the respective checking device or further-processing device and/or
- via the respective first transport interface (3, 4, 34, 13, 14) from the respective checking device or further-processing device or preparation station to the cyclically circulating transport loop (10).

14. Arrangement according to at least one of the preceding claims, **characterized in that** the transport device has, along the cyclically circulating transport loop (10), at least one transport interface, in particular a branch (23), to a bypass transport path (20, 21) for the valuable-document receptacles (5), which bypass transport path leads away from the cyclically circulating transport loop (10) to a further-processing device (W, W1-W2) and/or to another cyclically circulating transport loop (10'), wherein in particular
- valuable-document stacks (1), together with the valuable-document receptacle (5), which receives the respective valuable-document stack (1), can be transported from the cyclically circulating transport loop (10), via the bypass transport path (20), to a further-processing device (W, W1-W2) and/or to the other cyclically circulating transport loop (10), without the respective valuable-document stack being checked by one of the checking devices (P1, P2, P3), or
- valuable-document receptacles (5) without valuable-document stacks (1) received therein can be transported from the other cyclically circulating transport loop (10'), via the bypass transport path (21), to the cyclically circulating transport loop (10).

15. Method for processing valuable documents using two or more checking devices (P1, P2, P3) for checking valuable documents and using a transport device (9), to which the respective checking device is connected via at least one transport interface (3, 4, 34) in each case, wherein in the method
- the transport device (9) transports a plurality of valuable-document receptacles (5), in each of which at least one valuable-document stack (1) is received, along a circulation direction, and
- the respective transport interface (3, 4, 34) transports the valuable-document stacks (1), possibly together with a valuable-document receptacle (5) which receives the respective at least one valuable-document stack, from the transport device (9) to the respective checking device (P1, P2, P3) and/or from the respective checking device (P1, P2, P3) to the transport device (9),
- wherein the transport device (9) forms a cyclically circulating transport loop (10) for the valuable-document receptacles (5), the cyclically circulating transport loop being closed in such a way that the valuable-document receptacles located in the cyclically circulating transport loop can pass through this transport loop several times in the same circulation direction, and the respective checking device (P1, P2, P3) is connected to the cyclically circulating transport loop (10) by the respective transport interface, and
- the respective transport interface (3, 4, 34) transports the respective valuable-document stack (1), possibly together with a valuable-document receptacle (5) which receives the respective at least one valuable-document stack, from the cyclically circulating transport loop (10) to the respective checking device (P1, P2, P3) and/or from the respective checking device (P1, P2, P3) to the cyclically circulating transport loop (10), **characterized**
**in that** valuable-document stacks which are transported in the transport device (9) are selectively fed to one or the other of the at least two checking devices (P1, P2), in particular depending on a utilization of at least one of the at least two checking devices, and the valuable-document stacks are exchanged as required at a variable time between the cyclically circulating transport loop and the respective checking device or vice versa, wherein in the method the valuable-document stacks (1) or valuable-document receptacle (5) are/is transported in accordance with one or more of Claims 1-14 in particular using the arrangement according to one or more of Claims 1-14.

## Revendications

1. Ensemble de traitement de documents de valeur, comprenant
- un dispositif de transport (9) pour des réceptacles de documents de valeur, qui est conçu pour transporter plusieurs réceptacles de documents de valeur (5), par lesquels au moins un empilement de documents de valeur (1) peut être respectivement reçu, le long d'une direction de circulation,
- deux dispositifs de vérification (P1, P2, P3) ou plus reliés au dispositif de transport (9) pour vérifier des documents de valeur, l'ensemble comportant pour chacun des dispositifs de vérification (P1, P2, P3) au moins une interface de transport (3, 4, 34) par l'intermédiaire de laquelle le dispositif de vérification respectif est relié au dispositif de transport (9) de sorte que l'empilement de documents de valeur (1), le cas échéant conjointement avec un réceptacle de documents de valeur (5) recevant ledit au moins un empilement de documents de valeur respectif, peuvent être transportés par l'intermédiaire de l'interface de transport (3, 4, 34) respective depuis le dispositif de transport (9) vers le dispositif de vérification (P1, P2, P3) respectif et/ou depuis le dispositif de vérification (P1, P2, P3) respectif vers le dispositif de transport (9),
- le dispositif de transport (9) formant une boucle de transport à circulation cyclique (10) pour les réceptacles de documents de valeur (5), qui est fermée sur elle-même, de sorte que les réceptacles de documents de valeur se trouvant dans la boucle de transport à circulation cyclique peuvent passer de multiples fois dans la même direction de circulation, et
- le dispositif de vérification (P1, P2, P3) respectif étant relié par l'interface de transport (3, 4, 34) respective à la boucle de transport à circulation cyclique (10), de sorte que l'empilement de documents de valeur (1) respectif, le cas échéant conjointement avec le réceptacle de documents de valeur (5) recevant ledit au moins un empilement de documents de valeur respectif, peut être transporté par l'intermédiaire de l'interface de transport (3, 4, 34) respective depuis la boucle de transport à circulation cyclique (10) vers le dispositif de vérification (P1, P2, P3) respectif et/ou depuis le dispositif de vérification (P1, P2, P3) respectif vers la boucle de transport à circulation cyclique (10), **caractérisé en ce que**
- l'ensemble est conçu pour échanger des empilements de documents de valeur, selon les besoins, à un instant variable, entre la boucle de transport à circulation cyclique et le dispositif de vérification respectif ou inversement, et
- l'ensemble comporte un dispositif de commande qui est conçu pour faire en sorte que des empilements de documents de valeur transportés dans le dispositif de transport (9) soient acheminés, au choix, vers l'un ou l'autre desdits au moins deux dispositifs de vérification (P1, P2), en particulier en fonction d'une charge de travail d'au moins l'un desdits au moins deux dispositifs de vérification.

2. Ensemble selon la revendication 1, **caractérisé en ce que** l'ensemble comporte, le long de la boucle de transport à circulation cyclique (10), une première interface de transport (23) menant à un chemin alternatif (16) pour les réceptacles de documents de valeur (5) et comporte, en observant dans le sens de circulation de la boucle de transport à circulation cyclique (10) en aval de la première interface de transport (23), une deuxième interface de transport (24) menant au chemin alternatif (16) pour les réceptacles de documents de valeur, le chemin alternatif (16) étant en particulier un raccourci (16) plus court que le chemin entre la première interface de transport (23) et la deuxième interface de transport (24) qui mène le long de la boucle de transport à circulation cyclique (10).

3. Ensemble selon au moins l'une des revendications précédentes, **caractérisé en ce que** l'ensemble comporte, le long de la boucle de transport à circulation cyclique (10), au moins une interface de transport (26, 27) menant vers une branche de sortie (25) dans laquelle des réceptacles de documents de valeur (5), le cas échéant conjointement avec au moins un empilement de documents de valeur qui y est reçu, peuvent être temporairement extraits de la boucle de transport à circulation cyclique (10) et réintroduits dans la boucle de transport à circulation cyclique (10) à un instant ultérieur.

4. Ensemble selon au moins l'une des revendications précédentes, **caractérisé en ce que** l'ensemble comporte, pour au moins l'un des dispositifs de vérification (P1, P2, P3), en tant qu'interface de transport respective, une interface d'amenée (3) ou une interface combinée d'amenée et d'extraction (34) qui est conçue pour acheminer un empilement de documents de valeur (1), le cas échéant conjointement avec un réceptacle de documents de valeur (5) recevant ledit au moins un empilement de documents de valeur respectif, depuis la boucle de transport à circulation cyclique (10) vers le dispositif de vérification (P1, P2, P3) respectif.

5. Ensemble selon au moins l'une des revendications précédentes, **caractérisé en ce que** l'ensemble comporte, pour au moins l'un des dispositifs de vérification (P1, P2, P3), en tant qu'interface de transport respective, une interface d'extraction (4) ou une interface combinée d'amenée et d'extraction (34), qui est conçue pour extraire un empilement de documents de valeur (1), le cas échéant conjointement avec un réceptacle de documents de valeur (5) recevant ledit au moins un empilement de documents de valeur, depuis le dispositif de vérification (P1, P2, P3) respectif vers la boucle de transport à circulation cyclique (10).

6. Ensemble selon la revendication 5, **caractérisé en ce que** l'ensemble comporte, le long de la boucle de transport à circulation cyclique (10), au moins une interface de transport menant à un dispositif de post-traitement (W, W1-W2), par laquelle le dispositif de post-traitement (W, W1-W2) respectif est relié à la boucle de transport à circulation cyclique (10), l'interface de transport (13) du dispositif de post-traitement respectif étant conçue pour extraire de la boucle de transport à circulation cyclique (10) un empilement de documents de valeur (1) vérifié par l'un des dispositifs de vérification, le cas échéant conjointement avec un réceptacle de documents de valeur (5) recevant ledit au moins un empilement de documents de valeur respectif, afin de pouvoir transporter les empilements de documents de valeur vers le dispositif de post-traitement (W, W1-W2) respectif.

7. Ensemble selon au moins l'une des revendications précédentes, **caractérisé en ce que**, pour au moins l'un des dispositifs de vérification (P1, P2, P3), l'ensemble comporte respectivement
- une interface d'amenée (3) par l'intermédiaire de laquelle des empilements de documents de valeur (1), le cas échéant conjointement avec un réceptacle de documents de valeur recevant ledit au moins un empilement de documents de valeur respectif, peuvent être acheminés depuis la boucle de transport à circulation cyclique vers le dispositif de vérification (P1, P2, P3) respectif,
- mais également une interface d'extraction (4) par l'intermédiaire de laquelle les empilements de documents de valeur (1) vérifiés par le dispositif de vérification respectif, le cas échéant conjointement avec un réceptacle de documents de valeur recevant ledit au moins un empilement de documents de valeur respectif, peuvent être extraits du dispositif de vérification (P1, P2, P3) respectif vers une autre boucle de transport à circulation cyclique (10'),
ledit au moins un dispositif de vérification (P1, P2, P3) étant relié de manière à être situé entre la boucle de transport à circulation cyclique (10) et l'autre boucle de transport à circulation cyclique (10'), de sorte que des documents de valeur peuvent être transportés, par l'interface d'amenée, depuis la boucle de transport à circulation cyclique (10) vers le dispositif de vérification (P1, P2, P3) respectif, puis par l'interface d'extraction, depuis ce dispositif de vérification vers l'autre boucle de transport à circulation cyclique (10').

8. Ensemble selon au moins l'une des revendications précédentes, **caractérisé en ce que**, pour au moins l'un des dispositifs de vérification, l'ensemble comprend respectivement
- une interface d'amenée (3) par l'intermédiaire de laquelle des empilements de documents de valeur (1), le cas échéant conjointement avec un réceptacle de documents de valeur (5) recevant ledit au moins un empilement de documents de valeur respectif, peuvent être acheminés depuis la boucle de transport à circulation cyclique (10) vers le dispositif de vérification (P1, P2, P3) respectif,
- mais également une interface d'extraction (4) par l'intermédiaire de laquelle les empilements de documents de valeur (1) vérifiés par le dispositif de vérification respectif peuvent, le cas échéant conjointement avec un réceptacle de documents de valeur (5) recevant ledit au moins un empilement de documents de valeur, être extraits vers la même boucle de transport à circulation cyclique (10) que celle depuis laquelle ils ont été acheminés vers le dispositif de vérification (P1, P2, P3) respectif.

9. Ensemble selon au moins l'une des revendications précédentes, **caractérisé en ce que**, pour au moins l'un des dispositifs de vérification, l'interface de transport (3, 4, 34) comporte un dispositif de préhension (30) qui est conçu pour
- retirer respectivement un empilement de documents de valeur (1), le cas échéant conjointement avec un réceptacle de documents de valeur (5) recevant ledit au moins un empilement de documents de valeur respectif, de la boucle de transport à circulation cyclique (10) et acheminer l'empilement de documents de valeur (1) respectif vers le dispositif de vérification (P1, P2, P3) respectif et/ou
- reprendre respectivement un empilement de documents de valeur (1), le cas échéant conjointement avec un réceptacle de documents de valeur (5) recevant ledit au moins un empilement de documents de valeur, depuis les dispositifs de vérification (P1, P2, P3) respectifs et l'acheminer vers la boucle de transport à circulation cyclique (10).

10. Ensemble selon au moins l'une des revendications précédentes, **caractérisé en ce que** l'ensemble comporte, pour au moins l'un des dispositifs de vérification, une interface combinée d'amenée et d'extraction (34) qui est conçue pour transporter des empilements de documents de valeur (1), le cas échéant respectivement conjointement avec un réceptacle de documents de valeur (5) recevant ledit au moins un empilement de documents de valeur respectif, depuis la boucle de transport à circulation cyclique (10) vers le dispositif de vérification (P1, P2, P3) respectif, mais également depuis le dispositif de vérification (P1, P2, P3) respectif vers la boucle de transport à circulation cyclique (10).

11. Ensemble selon au moins l'une des revendications précédentes, **caractérisé en ce que**, pour au moins l'un des dispositifs de vérification (P1, P2, P3), l'interface de transport (3, 4, 34) respective du dispositif de vérification respectif est conçue pour transporter un réceptacle de documents de valeur (5), conjointement avec au moins un empilement de documents de valeur (1) reçu par celui-ci, de manière continue depuis la boucle de transport à circulation cyclique (10), par l'intermédiaire de l'interface de transport (3, 34), vers le dispositif de vérification respectif et/ou de manière continue depuis le dispositif de vérification respectif, par l'intermédiaire de l'interface de transport (4, 34), vers la boucle de transport à circulation cyclique (1).

12. Ensemble selon au moins l'une des revendications 5 ou 10, **caractérisé en ce que**, pour au moins l'un des dispositifs de vérification, l'interface d'extraction (4) ou l'interface combinée d'amenée et d'extraction (34) du dispositif de vérification (P1, P2, P3) comporte une ouverture d'entrée (15) qui est reliée au dispositif de transport (9) de la boucle de transport à circulation cyclique (10), de sorte qu'un ou plusieurs réceptacles de documents de valeur contenant respectivement au moins un empilement de documents de valeur (1) peuvent être transportés en continu depuis le dispositif de vérification (P1, P2, P3) par l'intermédiaire de l'ouverture d'entrée (15) vers la boucle de transport à circulation cyclique (10).

13. Ensemble selon au moins l'une des revendications précédentes, **caractérisé en ce que** la boucle de transport à circulation cyclique (10) comporte au moins deux sections de transport (40, 50) orientées dans des directions mutuellement opposées, dans lesquelles les réceptacles de documents de valeur (5) peuvent être transportés dans des directions mutuellement opposées, et qui s'étendent parallèlement l'une à l'autre, les deux sections de transport (40, 50) parallèles et orientées dans des directions opposées de la boucle de transport à circulation cyclique (10) étant de préférence disposées l'une au-dessous de l'autre ou l'une à côté de l'autre, au moins une première interface de transport (3, 4, 34, 13, 14) étant présente le long d'au moins l'une des deux sections de transport parallèles et opposées (40, 50), notamment une interface de transport (3, 4, 34) de l'un des dispositifs de vérification et/ou une interface de transport (13) de l'un des dispositifs de post-traitement (W, W1-W2) et/ou une interface de transport (14) de l'un des postes de préparation (E, E1-E8), la première interface de transport étant conçue pour transporter un empilement de documents de valeur, le cas échéant conjointement avec un réceptacle de documents de valeur recevant ledit au moins un empilement de documents de valeur respectif,
- par l'intermédiaire de la première interface de transport (3, 4, 34, 13, 14) respective, depuis la boucle de transport à circulation cyclique (10) vers le dispositif de vérification ou le dispositif de post-traitement respectif et/ou
- par l'intermédiaire de la première interface de transport (3, 4, 34, 13, 14) respective, depuis le dispositif de vérification, le dispositif de post-traitement ou le poste de préparation respectif, vers la boucle de transport à circulation cyclique (10).

14. Ensemble selon au moins l'une des revendications précédentes, **caractérisé en ce que** le dispositif de transport comporte, le long de la boucle de transport à circulation cyclique (10), au moins une interface de transport, en particulier une dérivation (23), menant vers un chemin de transport de dérivation (20, 21) pour les réceptacles de documents de valeur (5), qui mène de la boucle de transport à circulation cyclique (10) à un dispositif de post-traitement (W, W1-W2) et/ou à une autre boucle de transport à circulation cyclique (10'), dans lequel, en particulier
- les empilements de documents de valeur (1), conjointement avec le réceptacle de documents de valeur (5) recevant l'empilement de documents de valeur (1) respectif, peuvent être transportés par la boucle de transport à circulation cyclique (10), par l'intermédiaire du chemin de transport de dérivation (20), vers un dispositif de post-traitement (W, W1-W2) et/ou vers l'autre boucle de transport à circulation cyclique (10), sans que l'empilement de documents de valeur respectif ne soit vérifié par l'un des dispositifs de vérification (P1, P2, P3), ou
- les réceptacles de documents de valeur (5) ne contenant pas d'empilement de documents de valeur (1) peuvent être transportés, par l'intermédiaire du chemin de transport de dérivation (21), depuis l'autre boucle de transport à circulation cyclique (10') vers la boucle de transport à circulation cyclique (10).

15. Procédé de traitement de documents de valeur à l'aide de deux ou plusieurs dispositifs de vérification (P1, P2, P3) pour vérifier des documents de valeur et à l'aide d'un dispositif de transport (9), auquel le dispositif de vérification respectif est respectivement relié par l'intermédiaire d'au moins une interface de transport (3, 4, 34), dans lequel, selon le procédé
- le dispositif de transport (9) transporte plusieurs réceptacles de documents de valeur (5) dans chacun desquels est reçu au moins un empilement de documents de valeur (1), dans une direction de circulation, et
- l'interface de transport (3, 4, 34) respective transporte les empilements de documents de valeur (1), le cas échéant conjointement avec un réceptacle de documents de valeur (5) recevant ledit au moins un empilement de documents de valeur, depuis le dispositif de transport (9) vers le dispositif de vérification (P1, P2, P3) respectif et/ou depuis le dispositif de vérification (P1, P2, P3) respectif vers le dispositif de transport (9),
- le dispositif de transport (9) formant une boucle de transport à circulation cyclique (10) pour les réceptacles de documents de valeur (5), qui est fermée sur elle-même, de sorte que les réceptacles de documents de valeur se trouvant dans la boucle de transport à circulation cyclique peuvent passer de multiples fois dans la même direction de circulation, et le dispositif de vérification (P1, P2, P3) respectif étant relié par l'interface de transport respective à la boucle de transport à circulation cyclique (10), et
- l'interface de transport (3, 4, 34) respective transporte l'empilement de documents de valeur (1) respectif, le cas échéant conjointement avec un réceptacle de documents de valeur (5) recevant ledit au moins un empilement de documents de valeur respectif, depuis la boucle de transport à circulation cyclique (10) vers le dispositif de vérification (P1, P2, P3) respectif et/ou depuis le dispositif de vérification (P1, P2, P3) respectif vers la boucle de transport à circulation cyclique (10), **caractérisé en ce que**
les empilements de documents de valeur transportés dans le dispositif de transport (9) sont acheminés, au choix, vers l'un ou l'autre desdits au moins deux dispositifs de vérification (P1, P2), en particulier en fonction d'une charge de travail d'au moins l'un desdits au moins deux dispositifs de vérification, et les empilements de documents de valeur sont échangés, selon les besoins, à un instant variable, entre la boucle de transport à circulation cyclique et le dispositif de vérification respectif ou inversement, les empilements de documents de valeur (1) ou le réceptacle de documents de valeur (5) étant, selon le procédé, transportés en particulier à l'aide de l'ensemble selon l'une ou plusieurs des revendications 1-14.
